# FASCICULE DE BREVET EUROPEEN

(11) **EP 2 882 043 B1**
(45) Date de publication et mention de la délivrance du brevet: **21.09.2016**
(21) Numéro de dépôt: 14196896.6
(22) Date de dépôt: 09.12.2014
(51) Int. Cl.: H01R 11/15, H01R 13/66, H02G 1/02

(54) **Dispositif et système de mise à la terre**
Erdungsvorrichtung und -system
Earthing device and system

(30) Priorité: 09.12.2013 LU 92328; 23.12.2013 LU 92343
(43) Date de publication de la demande: 10.06.2015
(73) Titulaire: Solarafi S.à.r.l., 6180 Gonderange (LU)
(72) Inventeur: Mattioli, Raymond, 6180 Gonderange (LU)
(74) Mandataire: Pronovem

(56) Documents cités:
- WO-A1-2010/043801
- FR-A1- 2 937 191

## Description

La présente invention concerne un dispositif, respectivement un système de mise à la terre. Elle concerne plus particulièrement un dispositif électromécanique de mise à la terre sécurisé à asservissement pince-étau, aussi appelé MALT APE électromécanique, et un système de mise à la t erre avec un tel MALT APE électromécanique.

### Définitions de la terminologie employée ci-après :

**Dispositif MALT :** Dispositif de mise à la terre, composé généralement au moins d'un étau de terre et au moins d'une pince de mise à la terre. L'étau et la (ou les) pince(s) étant reliés unilatéralement entre eux par un conducteur électrique isolé.
**Conducteur :** Toute pièce pouvant être qualifiée de conducteur électrique, non isolé électriquement.
**Charpente métallique :** Toute construction métallique avec une liaison à la terre, de sorte à présenter le même potentiel électrique que la terre environnante.
**APE** : asservissement pince-étau
**GMAPE** : un dispositif ou système de mise à la terre, comprenant des éléments selon la présente invention ;
Un dispositif MALT est généralement constitué d'un câble en cuivre ou en aluminium, isolé électriquement, connecté à une extrémité à au moins une pince de mise à la terre et à l'autre extrémité à au moins un étau de terre. L'étau de terre est destiné à être fixé sur une charpente métallique avec une liaison à la terre, tandis que la pince de mise à la terre est destinée à être fixée sur le conducteur.

Le dispositif MALT a pour but d'assurer la sécurité des personnes lors des travaux sur ou à proximité des ouvrages électriques. Le dispositif MALT est également utilisé pour assurer le même potentiel électrique (équipotentialité) sur différents conducteurs. Cette faculté d'équipotentialité peut également être reliée à la terre. Dans ce cas on parle de dispositif de mise à la terre et en court-circuit (en abrégé « dispositif MALT CC »). Le dispositif MALT CC est généralement composé d'un étau de terre, lequel étant relié à plusieurs pinces de mise à la terre. En général on retrouve autant de pinces de mise à la terre qu'il y a de phases sur le réseau électrique. Les pinces de mise à la terre pouvant être reliées à l'étau de terre généralement par une pièce de ralliement. Celle-ci forme le noeud de distribution. L'étau de terre étant relié à cette pièce de ralliement d'un côté et de l'autre côté sont relié les pinces de mise à la terre, généralement en nombre de trois. Il est également possible de relier l'étau de terre à une pince de mise à la terre et que cette première pince de mise à la terre soit reliée à une seconde pince de mise à la terre et que cette seconde pince de mise à la terre soit reliée à une troisième pince de mise à la terre et ainsi de suite... Ou bien l'étau de terre est relié à une première pince de mise à la terre, laquelle est reliée elle-même à plusieurs pinces de mise à la terre. (Dans ce contexte, le terme de « relié » signifie qu'il existe une liaison par tresse conductrice isolante entre les différents composants du dispositif de mise à la terre).

Il existe également des dispositifs MALT ou MALT CC, lesquels ne sont pas équipés d'un étau de terre, mais ne disposent que de pinces de mise à la terre pour se connecter sur les conducteurs. L'une d'entre-elles assurant alors le contact vers la terre sur le conducteur de terre par exemple.

En fonction du niveau de la tension d'exploitation de l'ouvrage électrique ou bien en fonction des spécificités techniques de l'installation électrique, les dispositifs de raccordement à l'installation électrique ainsi qu'au réseau de terre, qui dans le présent document sont généralisés sous la dénomination de pince de mise à la terre et d'étau de terre, peuvent avoir des dénominations différentes et peuvent avoir des aspects différents des éléments repris dans les représentations graphiques du présent document.

Dans un environnement électrique, il est indispensable de se prémunir des risques électriques en cas de travaux sur des conducteurs hors tension ou de conducteurs à proximité de circuits électriques sous tension.

Après une première étape de consignation, il est procédé à la vérification d'absence de tension. Si l'absence de tension est confirmée, les dispositifs MALT sont posés sur les conducteurs hors tension, avant toute intervention humaine.

Le dispositif MALT établit une liaison entre le conducteur et la terre, généralement par l'intermédiaire d'une charpente métallique. Cette liaison est assurée par un câble, généralement en cuivre, d'une section permettant d'assurer un courant de défaut d'une certaine intensité pendant un laps de temps minimal, assurant ainsi le déclenchement du disjoncteur en cas de défaut électrique.

Pour assurer la sécurité de l'intervenant, la pose des dispositifs MALT doit se faire impérativement dans un ordre bien défini : D'abord l'étau de terre doit être fixé à la charpente métallique de sorte à garantir un contact électrique par un certain couple de serrage. Ensuite la pince de mise à la terre doit être fixée sur le conducteur électrique hors tension. La dépose doit respecter le sens inverse, c'est à dire d'abord la dépose de la pince de mise à la terre du conducteur et ensuite la dépose de l'étau de terre de la charpente métallique.

Bien que ces opérations sont en principe effectuées par du personnel qualifié et que des rappels réguliers sur la sécurité électrique se font tout au long de l'année, il arrive régulièrement des accidents d'électrocution plus ou moins graves voire mortels.

Les raisons sont que les opérateurs se trompent dans l'ordre de la pose ou dans la dépose ou se trompent carrément de dispositif MALT au niveau de l'étau de terre (quand plusieurs dispositif MALT sont fixés avec leurs étaux de terre respectifs proches les uns des autres sur la charpente métallique ou sur des points de dispositif MALT spécialement destinés à ces opérations) de sorte que l'opérateur, en cas de manipulation de l'étau de terre d'un dispositif MALT reliée au conducteur, devient lui-même conducteur par lequel s'évacue l'électricité vers la terre. L'opérateur est alors électrocuté et blessé plus ou moins grièvement.

### L'état de la technique :

Actuellement 2 systèmes de type MALT sécurisé avec asservissement pince-étau sont commercialisés :
Le SAMPE de la société française FAMECA est basé sur le brevet d'invention LU 91524 déposé le 11.02.2009 au Grand-Duché de Luxembourg et le brevet français FR 2937191. Voici son fonctionnement :
   En début des opérations, la pince de mise à la terre est bloquée dans sa position fermée, de sorte à rendre impossible sa fixation sur le conducteur en premier lieu. La clé est bloquée dans le barillet de l'étau de terre. Une fois l'étau de terre fixé sur la charpente, la clé peut être actionnée. L'actionnement de la clé bloque l'étau de terre dans sa position de fixation sur la charpente. Maintenant la clé peut être retirée et de l'étau de terre et insérée dans la pince de mise à la terre pour libérer celle-ci par son actionnement. En ouvrant la pince de mise à la terre, la clé devient prisonnière de celle-ci jusqu'à sa fermeture complète lors des opérations inverses de dépose.

Ce système a été adopté essentiellement par les exploitants de poste de haute tension en France. Cependant il n'a pas été accepté par les utilisateurs des entreprises privées. Les raisons de cette inacceptation par les utilisateurs des entreprises privées sont multiples :
- L'investissement est beaucoup plus cher qu'un dispositif MALT classique.
- La manipulation de la clé n'est pas conviviale et rend lourdaude l'utilisation de l'outil de MALT.
- Les risques liés à l'utilisation d'une clé sont multiples : risque de casse de clé, risque de perte de la clé pendant la phase opérationnelle, risque du gel connus sur les clés et serrures : blocage de la clé dans le barillet ou bien impossibilité d'insérer la clé dans le barillet.
- Le risque lié au faible nombre de clés et serrures différentes.
- Difficulté pour l'utilisateur d'arrêter la manivelle de serrage de l'étau de terre à l'endroit exact, permettant la libération de la clé.

Le dispositif MALT APE, commercialisé par l'entreprise française CATU, n'a pas connu de succès à ce jour. Ceci est principalement dû à sa mise en oeuvre très difficile: en début des opérations, la pince de mise à la terre est fixée solidairement à l'étau de terre, de sorte à ne former qu'une pièce très difficile à manipuler, vu sa taille et son poids. Arriver à fixer l'étau de terre sur la charpente par un utilisateur au sol est déjà un exploit, mais alors arriver à le poser à un endroit restreint ou sur un pylône de haute tension, devient chose impossible.

Ceci a comme conséquence que bien qu'il existe des solutions pour prévenir le risque d'électrocution grave ou mortel, les inconvénients de ces solutions rendent une utilisation large parmi les intervenants électriques très difficile voire impossible.

Mais aux vues des accidents électriques graves et mortels, des améliorations deviennent nécessaires pour assurer les vies humaines et la santé des intervenants.

Par contre, à l'heure actuelle il n'existe aucun dispositif sécurisé de type APE, permettant d'assurer la sécurité de l'opérateur lors de la pose et dépose de dispositifs MALT CC (mise à la terre et en court-circuit), dispositifs tels que spécifiés en début du présent document. Les dispositifs MALT CC sont généralement utilisés sur les réseaux de 20 kV et moins (en France). Ce qui veut dire qu'il existe beaucoup de tels dispositifs à risque potentiel d'électrocution et que jusqu'à présent il était impossible de se protéger contre ce risque. L'état actuel de la technologie avec clé et barillet, ne permet pas de gérer des pinces de mise à la terre multiples reliées sur un étau de terre. Comme la clé déposée sur l'étau de terre serré reste prisonnière de la pince de mise à la terre, elle ne peut être utilisée que sur une pince de mise à la terre et les autres restants libres, c'est-à-dire sans asservissement pince-étau, et de ce fait le risque ne peut pas être éliminé.

Un autre problème actuel de l'état actuel de la technologie est lié à la dépose des dispositifs MALT sur les ouvrages électriques à la fin des interventions.

Avant de pouvoir remettre l'ouvrage consigné sous tension, tous les dispositifs MALT précédemment posés doivent être déposés. Mais ceci n'est qu'un principe et comme il s'agit d'interventions humaines, parfois sur de longues périodes, il arrive que des dispositifs MALT soient oubliés sur l'ouvrage. Alors, lors de la remise sous tension, le dispositif MALT oublié provoque un court-circuit et le disjoncteur déclenche. L'ouvrage ne pourra dès lors être remis sous tension après avoir identifié la cause du déclenchement et, le cas échéant, de dommages sur le conducteur, après réparation de ceux-ci.

De nos jours, ces incidents (impossibilité d'exploiter une ligne de haute tension) peuvent rapidement se chiffrer à des centaines de milliers d'Euro.

Le document FR2937191 décrit un dispositif selon le préambule de la revendication 1.

### Description de l'invention :

Selon un premier aspect, la présente invention propose un dispositif, respectivement un système MALT sécurisé avec asservissement pince-étau, qui d'un côté élimine les risques électriques lors de la pose ou dépose des dispositifs MALT et de l'autre côté élimine les inconvénients de la clé (cassure, perte, manipulation, gel, etc...) en la supprimant carrément. L'invention augmente l'acceptation du système sécuritaire par une manipulation beaucoup plus conviviale que les systèmes existants. Elle augmente aussi la sécurité par la possibilité d'une identification individuelle de chaque dispositif MALT.

Un dispositif/système MALT selon l'invention est plus convivial car il élimine la contrainte d'un positionnement exact de la manette par l'utilisateur.

Selon un second aspect, la présente invention propose aussi un dispositif de contrôle et de commande électronique associé comme clé électronique active et intelligente avec un dispositif/système MALT selon l'invention. Dans le présent document, ce dispositif de contrôle et de commande électronique est encore appelé « BOUZER ». Contrairement à l'état de la technique, le BOUZER est, de préférence, l'élément actif dans le couple clé-serrure, c'est-à-dire que c'est le BOUZER, par les informations récoltées qui décide de la validation de l'action demandée par l'opérateur. C'est de préférence le BOUZER qui dispose de la source énergétique, permettant l'action de la serrure.

C'est le BOUZER qui identifie, mesure, reconnaît, lit, enregistre, autorise et commande l'action autorisée sur la serrure. Le BOUZER est le garant de la mise en oeuvre correcte d'un procédé, processus ou mode opératoire préalablement défini et intégré dans sa mémoire. Le BOUZER valide chaque étape du procédé, processus ou mode opératoire et autorise le passage à une étape ultérieure par sa programmation interne, ainsi que par l'activation ou non de la manoeuvre sur les serrures associées. Le BOUZER n'a pas forcément besoin d'agir à chaque étape. Comme dans l'exemple de la vérification d'absence de tension (VAT) décrit plus loin, il enregistre l'exécution correcte d'une étape intermédiaire. Il peut également faire du monitoring pour informer l'opérateur sur l'état de l'opération en cours ou bien sur l'étape elle-même, etc... Il permet également à l'opérateur de saisir manuellement des informations ou bien de valider par exemple une opération.

En général, le BOUZER est un outil autonome. Une fois le processus, le procédé ou le mode opératoire programmé, le BOUZER assure qu'il n'y a pas de passage à une étape hiérarchiquement supérieure ou inférieure, aussi longtemps que la ou les étapes du même niveau hiérarchique n'ont pas été mise en oeuvre correctement.

En corrélation avec un dispositif de gestion centralisé, ci-après aussi appelé « centrale GCEN », le BOUZER devient un dispositif dynamique et interactif. Dans cette configuration, le BOUZER peut recevoir des informations, ordres et autorisations supplémentaires ou complémentaires de la part de la centrale GCEN, laquelle peut être elle-même en contact avec d'autres dispositifs de type BOUZER ou avec d'autres centrales GCEN. La centrale GCEN gère et coordonne alors la corrélation entre tous les dispositifs associés, afin de garantir le respect d'un ou d'un ensemble de procédés, processus ou mode opératoire.

Le BOUZER assure le mode opératoire correct de la pose et dépose des dispositifs MALT. Il commande et actionne le verrouillage / déverrouillage et la condamnation / décondamnation de la pince de mise à la terre et de l'étau de terre du GMAPE.

La pince de mise à la terre ainsi que l'étau de terre du GMAPE dans lequel ces outils sont équipés des dispositifs mécaniques de fermeture et d'ouvertures conditionnelles, ladite pince de mise à la terre et ledit étau peuvent également être qualifiés de dispositif de serrure spéciale, permettant d'assurer ensemble avec le BOUZER, le mode opératoire de la mise en oeuvre sécurisée des dispositifs de MALT. Le BOUZER, faisant fonction de clé électronique. Le BOUZER est un dispositif portable qui est équipé dans sa version basique, en principe d'une source électrique, de préférence une pile rechargeable, d'une platine électronique avec microprocesseur, de mémoires de type RAM (random access memory) ou flash et de mémoire de type ROM (read only memory), d'un connecteur électronique et d'un interrupteur. Complémentairement il peut être équipé de dispositifs pour l'échange de données sans fil (téléphone mobile, wifi, bluetooth, satellite, etc...) et il est généralement équipé d'un dispositif d'identification de l'endroit exacte ou il se trouve, tel un GPS, le tout associé à un dispositif d'identification du moment (date et heure). Le BOUZER peut être équipé d'un dispositif de lecture de codes-barres ou de code flash. Il peut également être équipé d'un appareil photographique ou d'une caméra infrarouge, etc...Cette liste n'étant pas exhaustive. De manière générale, le BOUZER peut être équipé de tous les dispositifs lui permettant l'échange d'informations avec ou sans fil avec d'autres dispositifs, le BOUZER peut être équipé de tous les dispositifs existants, lui permettant l'identification temporelle, sensorielle, géographique etc...et de manière générale toute identification possible d'un moment ou d'une situation par l'emploi des dispositifs existants. En complément, le BOUZER peut être équipé de tout dispositif électrotechnique lui permettant la gestion et l'interprétation et le stockage de toutes les informations reçues. Le BOUZER permet en outre l'identification de l'endroit de pose et le moment de pose du GMAPE. Il est l'outil qui échange les informations du terrain avec la centrale de gestion GCEN.

La centrale GCEN est un outil de gestion centralisé. Elle regroupe toutes les informations du terrain et des ouvrages et gère l'ensemble des informations, ordres et autorisations de manière sécurisée et de sorte à ce que les opérations de mise en oeuvre soient toujours traçables et en corrélation avec les ordres et autorisations de différents intervenants. La centrale GCEN permet la visualisation de la situation réelle du terrain à tout instant. Ensemble avec la centrale GCEN et le GMAPE, le BOUZER permet la mise en oeuvre sécurisée d'ordres hiérarchisés et / ou de procédures nécessitant un respect chronologique des opérations.

Ce trio assure et garantit aussi-bien la sécurité des personnes que la sécurité des ouvrages ! Un système de mise à la terre selon la présente invention et se différents éléments fonctionnent par exemple comme suit :
a. Un dispositif MALT selon l'invention comprend généralement au moins un étau de terre relié par un conducteur électrique isolé, à une ou plusieurs pinces de mise à la terre. Pour faciliter la compréhension du présent document, il ne sera généralement spécifié qu'un étau de terre et une pince de mise à la terre, alors qu'en réalité on retrouve des dispositifs MALT et MALT CC disposant de plusieurs pinces de mise à la terre avec ou sans étau de terre. Plusieurs étaux de terre sont également possibles en relation avec des pinces de mise à la terre ou non.
b. L'étau de terre ainsi que la pince de mise à la terre sont équipés d'un dispositif de blocage et de condamnation commandés et actionnés par le BOUZER.
c. L'ensemble étau de terre relié à la pince de mise à la terre forme un couple inséparable avec identification unique. Cette identification est ancrée par le fabricant dans la mémoire électrotechnique de type ROM (read only memory) de préférence, aussi-bien dans l'étau de terre que dans la pince de mise à la terre. En complément, chaque dispositif peut être équipé d'une mémoire électrotechnique de de type RAM (random access memory) ou de type flash ou carte SD par exemple. Cette mémoire peut accueillir des informations externes tel par exemple l'endroit et / ou le moment de pose du GMAPE et également d'autres informations comme par exemple la date de la dernière révision technique, l'organisme de contrôle, etc...
d. Dans son état initial la pince de mise à la terre est condamnée en position fermée. Ceci rend impossible sa fixation sur un quelconque conducteur électrique et élimine ainsi le risque d'électrocution de l'opérateur lors de la pose du dispositif MALT. Dans son état initial, l'étau de terre n'est soumis à aucune contrainte et peut être manipulé librement. Cette configuration impose à l'opérateur de fixer d'abord l'étau de terre sur la charpente métallique.
e. Après avoir serré, avec une certaine force, c'est-à-dire au couple de serrage préréglé, l'étau de terre sur une pièce de la charpente métallique, celui-ci atteint son point mort et la manette marche à vide. L'opérateur ne peut donc pas se tromper sur la force à appliquer. En atteignant la marche à vide il sait que cette opération est terminée et correctement effectuée. A cet instant l'interrupteur du circuit de contrôle électronique est automatiquement porté dans sa position fermée.
f. Maintenant le BOUZER est connecté à l'étau de terre. Celui-ci vérifie l'état fermé de l'interrupteur et lit et enregistre le code personnel de l'étau de terre. Ensuite le BOUZER commande l'ouverture de l'interrupteur de condamnation intégré dans le circuit électronique de l'actionneur électromagnétique. Ceci ouvre le circuit électrique de l'étau de terre et le condamne ainsi dans sa position actuelle. Le BOUZER procède à la vérification de cette opération et l'intègre dans sa mémoire. La fixation et condamnation de l'étau de terre dans sa position actuelle rend impossible son débranchement accidentel de la charpente métallique.
g. Maintenant le BOUZER est connecté à la pince de mise à la terre. D'abord il vérifie dans la mémoire de la pince de mise à la terre que le code de celle-ci est bien associé à celui de l'étau de terre précédemment condamné. Le cas échéant d'un retour positif, il commande la fermeture de l'interrupteur de condamnation intégré dans le circuit électronique de l'actionneur électromagnétique. Maintenant le BOUZER peut commander l'action de déblocage de la pince de mise à la terre par l'intermédiaire d'un actionneur électromagnétique par exemple. Le BOUZER procède à la vérification de cette opération et l'intègre dans sa mémoire. Le BOUZER est débranché de la pince de mise à la terre et celle-ci peut maintenant être desserrée et ensuite fixée sur le conducteur pour le relier à la terre avant toute intervention sur ou à proximité de celui-ci.
h. L'étau de terre étant condamné en position serrée sur la charpente métallique, celui-ci ne pourra être déposé qu'après dépose de la pince de mise à la terre sur le conducteur. L'accident électrique est ainsi éliminé.
i. La dépose du dispositif MALT n'est possible que dans le bon sens, c'est-à-dire en commençant par la dépose de la pince de mise à la terre du conducteur. Une fois déposée, la pince de mise à la t erre doit être fermée complètement. La fermeture complète actionne le blocage automatique de la pince de mise à la terre dans sa position fermée et actionne en position de fermeture l'interrupteur du circuit de contrôle électronique.
j. Maintenant le BOUZER est connecté à la pince. Il lit le code personnel de la pince de mise à la terre dans la mémoire de celle-ci et l'enregistre dans sa propre mémoire. Maintenant, par le circuit de contrôle électronique, il contrôle le blocage de la pince de mise à la terre dans sa position fermée et ensuite condamne la pince de mise à la terre dans cette position fermée et bloquée en commandant l'ouverture de l'interrupteur de condamnation intégré dans le circuit électronique de l'actionneur électromagnétique. Le BOUZER procède à la vérification de cette opération et l'intègre dans sa mémoire.
k. Maintenant le BOUZER est connecté à l'étau de terre. Il vérifie la correspondance du code de l'étau de terre avec celui de la pince de mise à la terre précédemment déposée et bloquée. Le cas échéant d'un retour positif, le BOUZER commande la fermeture de l'interrupteur de condamnation intégré dans le circuit électronique de l'actionneur électromagnétique. Ceci ferme le circuit électrique de l'étau de terre. Maintenant le BOUZER procède au déblocage de l'étau de terre en mettant sous tension l'actionneur électromagnétique. Cette action ouvre également l'interrupteur du circuit de contrôle. Le BOUZER procède à la vérification de cette opération et l'intègre dans sa mémoire.
l. Maintenant l'étau de terre peut être déposé de la charpente métallique, sans risque électrique pour l'opérateur.
m. On peut également mettre en oeuvre une solution simplifiée, c'est-à-dire moins sécuritaire de l'étau de terre et de la pince de mise à la terre, en laissant de côté l'interrupteur de condamnation intégré dans le circuit électronique de l'actionneur électromagnétique de la pince de mise à la terre et de l'étau de terre.
n. Comme ces actions ont été enregistrées dans la mémoire du BOUZER et que ces informations sont échangées avec la centrale GCEN, la situation du terrain est toujours disponible en copie conforme auprès de la centrale GCEN. Il n'est donc plus possible d'oublier un dispositif MALT sur un ouvrage électrique.

On peut également intégrer la source électrique (batteries, etc...) directement dans l'étau de terre et la pince de mise à la terre et imaginer une commande sans fil avec le BOUZER. Cependant l'introduction de piles électriques dans les équipements tels les pinces de mise à la terre et étaux de terre n'est pas à recommander car elle intègre des risques conséquents au niveau de la sécurité générale du système. (Un dispositif de MALT peut rester posé pendant de nombreux mois sur un ouvrage électrique et sa dépose doit être garantie à tout moment.) L'introduction de la source électrique dans le BOUZER présente par conséquent le niveau de sécurité le plus élevé. Le GMAPE fonctionne avec un minimum d'électronique à risque intégrée dans l'étau de terre et la pince de mise à la terre. Cette solution intègre les parties sensibles du système dans le BOUZER, qui est un élément indépendant du dispositif MALT. Cette solution garantit un maximum de sécurité aux opérations de pose et dépose du dispositif MALT. Elle garantit un maximum de sécurité et au système intégré de gestion centralisée, des opérations d'autorisations, d'ordres et de commande.

Cependant il est possible d'équiper les équipements tels les pinces de mise à la terre et étaux de terre d'un circuit électromagnétique d'induction en réception. Le BOUZER étant équipé lui-aussi d'un circuit électromagnétique d'induction mais en émission. Le BOUZER, au lieu d'être connecté électriquement et physiquement sur ces équipements, pourrait, à proximité rapprochée du circuit d'induction récepteur d'un tel équipement, émettre des impulsions électromagnétiques par son propre circuit électromagnétique d'induction émetteur et transférer ainsi de l'énergie à cet équipement. Comme l'équipement n'a besoin que d'une faible consommation momentanée d'énergie électrique, cette solution est tout à fait envisageable. L'échange des informations avec ces dispositifs pourrait alors se faire également sans fil, à distance rapprochée comme par exemple sur les serrures électroniques. (Identification par radiofréquence, etc...) Quand le BOUZER n'est pas connecté, il est recommandé que tous les contacts présents dans les raccords du BOUZER, de l'étau de terre, de la pince de mise à la terre et d'autres outils faisant partie du système, soient mis en court-circuit mutuel.

Au lieu de brancher le BOUZER successivement sur l'étau de terre et puis sur la pince de mise à la terre ou vice-versa lors de la dépose, il est également possible de concevoir les raccords ou bien sur l'étau de terre ou bien le BOUZER pour un branchement simultané de l'EATU et de la pince de mise à la terre avec le BOUZER. Cette solution a l'avantage d'une mise en oeuvre facilitante car le BOUZER ne doit être manipulé qu'une fois. Le second avantage est que cette configuration ouvre la possibilité à effectuer un contrôle de bonne continuité de la MALT avant pose. (Résistance Ohmique)

La configuration de base des équipements, tels la pince de mise à la terre et l'étau de terre avec une seule mémoire de type ROM (lecture seule), permet à chaque BOUZER d'actionner tous les GMAPE. De préférence le code est personnalisé par client, de sorte à ce que toute entreprise ou client ne puisse opérer que sur son propre matériel.

Cependant si ces équipements sont équipés, de préférence complémentairement d'une mémoire de type RAM (lecture et écriture), il devient possible de gérer des situations plus complexes. En effet, chaque opération pouvant être personnalisée par un code spécifique, lequel est déposé dans la mémoire RAM de l'équipement, rend cet équipement unique.

Une action ultérieure sur cet équipement peut alors être sujette à des autorisations spécifiques et de ce fait n'être exécuté qu'en cas de disposition de ces autorisations dans le BOUZER. Cette autorisation peut être donnée à un BOUZER spécifique ou à plusieurs BOUZER. L'autorisation étant alors gérée et communiquée au(x) BOUZER par la centrale GCEN.

Le système de limitation du couple de serrage par un passage au point mort de la manette peut être mis en oeuvre selon plusieurs solutions, dont par exemple :
- Un limiteur de couple introduit dans l'axe de serrage.
- Un système de clé dynamométrique intégré dans l'axe de serrage.
- Les deux solutions précédentes peuvent également être intégrées dans le manche, comme pièce de contact avec l'axe de serrage. Au cas où ce manche serait configuré de manière mobile, il pourrait être solidaire avec le BOUZER.
- Le système mécanique innovant tel que décrit dans le présent brevet.

Il faut cependant préciser que le système de limitation du couple de serrage par un passage au point mort de la manette n'est pas une condition incontournable pour le fonctionnement du GMAPE et de la centrale GCEN. On peut également imaginer un système avec arrêt franc dès que le couple de serrage est atteint. D'autres solutions sont certes envisageables comme par exemple l'identification optique du bon positionnement de la manette par l'opérateur. Le blocage de l'axe peut se faire dans ce cas par exemple à l'aide d'un bouton poussoir ou tout autre verrou.

Par contre, pour un bon fonctionnement, il est strictement nécessaire que la condamnation et le déblocage soient contrôlés et commandés par le BOUZER.

Dans tous les cas, les solutions telles que décrites dans le présent document sont les plus sécuritaires tout en respectant une mise en oeuvre autant conviviale.

Dans le présent document nous retrouvons plusieurs innovations qui ensemble permettent la réalisation du concept global de GMAPE :
1. Le limiteur de couple :
   Le limiteur de couple décrit dans ce document est innovant car il s'agit d'un limiteur de couple à axe continue, c'est-à-dire que l'axe principal qui transmet les efforts (couple) n'est pas scindé. La transmission des efforts se fait de manière synchrone.
   L'état actuel de la technologie ne connaît que des limiteurs de couple à axe de transmission divisé. Un principal inconvénient de l'état actuel de la technologie est qu'il faut mettre en oeuvre des solutions mécaniques pour garantir la transmission des efforts à travers l'axe de transmission, alors que la solution décrite dans le présent document ne connaît plus ce problème.
2. Le BOUZER permet de remplacer le système de classique condamnation à serrure mécanique avec barillet et clé. Le BOUZER élimine tous les risques et inconvénients liés à l'état actuel de la technologie et rend l'utilisation des dispositifs MALT avec système APE plus convivial et plus sûr.
3. La combinaison du BOUZER avec la centrale GCEN permet une innovation supplémentaire. Ce tandem permet de gérer dans des conditions de sécurité les plus étendues, des opérations compliquées d'autorisations imbriquées et parallèles, donnant lieu à exécution d'ordres précis, tout en permettant la traçabilité de chaque pas et le monitoring de la situation détaillée dans toute sa globalité. Combiné au système APE du GMAPE, la mise en oeuvre d'une opération, sujette à autorisations diverses, peut être garantie dans les conditions de sécurité les plus étendues et matérialisée ensuite, précisément sur écran par exemple.
4. Le BOUZER est un outil qui permet de commander et d'actionner le verrouillage / déverrouillage et la condamnation / décondamnation de la pince de mise à la terre et de l'étau de terre du GMAPE. Le BOUZER permet en outre l'identification du lieu et moment de pose du GMAPE. Il est l'outil qui échange les informations du terrain avec la centrale de gestion GCEN. Il permet l'identification de la situation du terrain et permet la transposition de celle-ci vers la centrale GCEN. Il est le lien entre le terrain et le bureau. Il permet la mise en oeuvre sécurisée d'ordres précis.
5. L'introduction du BOUZER, associé aux mémoires électroniques des différents dispositifs tels l'étau de terre et la pince de mise à la terre, permet pour la première fois la construction d'un dispositif de type MALT CC sécurisé. En effet, le code contenu dans la mémoire de l'étau de terre peut être associé à plusieurs pinces de mise à la terre et vice versa. De cette manière il est possible de débloquer successivement plusieurs pinces de mise à la terre après avoir serré et condamné un étau de terre. Le BOUZER reconnaîtra l'association des différentes pinces de mise à la terre à l'étau de terre précédemment verrouillé. Lors de la dépose, le BOUZER, connecté successivement aux différentes pinces de mise à la terre, lira à chaque fois le code associé à chaque pince de mise à la terre après contrôle de la condamnation en position fermée de chacune. C'est uniquement après avoir lu en confirmation de condamnation tous les codes des pinces de mise à la terre associées à l'étau de terre qu'il pourra ensuite procéder au déblocage de l'étau de terre permettant sa dépose. Ceci assurant la position fermée et condamnée de toutes les pinces de mise à la terre associées à un étau de terre. (Voici un exemple de codification : code étau de terre « ET1xyzP3 », dans lequel « ET1 » signifie que le nombre d'étaux de terre est un, « xyz » étant un code d'identification propre, associant une pince de mise à la terre à un étau de terre, et « P3 » signifiant que le nombre de pinces de mise à la terre est trois. La première pince de mise à la terre a le code « xyzP1 », la seconde pince de mise à la terre a le code « xyzP2 » et la troisième pince de mise à la terre a le code « xyzP3 ». Chaque pince de mise à la terre est associée par le code « xyz » à l'étau de terre et uniquement à celui-ci.) Une gestion similaire pourra également gérer plusieurs étaux de terre reliés entre eux et reliés également à plusieurs pinces de mise à la terre.

Pour illustration, voici un exemple du domaine de l'hygiène sanitaire : Avant de pouvoir entrer dans une enceinte à hygiène élevée, l'employé autorisé d'accès, doit d'abord rester pendant 1 minute sur un tapis nettoyant les bottes et ensuite passer ses mains dans une machine de décontamination pendant 30 secondes. Il est important de respecter l'ordre des opérations, ainsi que les durées minimales. Le tapis nettoyant ainsi que la machine de décontamination sont tous les deux équipés de capteurs et de dispositifs permettant d'échanger des informations avec le BOUZER. Le BOUZER ne permettra l'accès à l'enceinte à hygiène élevée qu'aux personnes autorisées (identification par code ou empreinte digitale dans le BOUZER) et ceci uniquement après avoir respecté scrupuleusement les opérations de décontamination dans l'ordre exigé.

Le recours au BOUZER devient très intéressant pour des modes opératoire plus compliqués et/ou pour des opérations espacées géographiquement comme dans des enceintes industrielles ou en pleine nature, ou le recours à du câblage devient impossible. Pour illustrer les possibilités du trio GMAPE, BOUZER et GCEN, voici un exemple concret qui pourrait trouver son application dans le domaine électrique :

Généralement, avant de pouvoir intervenir, pour travaux hors tension sur un ouvrage électrique de haute tension, l'intervenant a besoin d'une attestation de consignation de première étape. Cette attestation lui est généralement donnée par message téléphonique collationné par le PCG (Poste de Commandes Groupées) et inscrit de part et d'autre sur le document d'accès aux ouvrages électriques.

Après réception de cette autorisation, le chargé de travaux donne un ordre écrit à une ou plusieurs équipes pour procéder à la seconde étape de la consignation à des endroits bien définis. Ceci est une obligation avant toute intervention pour travaux. Dans cet exemple il donnera ordre à deux équipes de procéder à la seconde étape de consignations à deux endroits différents d'une ligne de haute tension pour poser des dispositifs MALT aux extrémités de la section sur laquelle les équipes vont intervenir après pour effectuer des travaux. La seconde étape de consignation consiste en l'identification de l'ouvrage sur place, la vérification d'absence de tension à l'aide d'un détecteur de vérification d'absence de tension (détecteur VAT) et la mise à la terre des conducteurs électriques à l'aide des dispositifs de MALT. Une fois ces opérations effectuées par les deux équipes et confirmées sur leur ordre écrit et au chargé de travaux, celui-ci donnera autorisation aux intervenants pour les travaux prévus. Maintenant on doit encore matérialiser les endroits de pose des dispositifs MALT sur le document d'accès. En début de journée, le chargé de travaux informe le poste de commandes groupées (PCG) de la section sur laquelle ses équipes seront opérationnelles et en soirée il informera le poste de commandes groupées (PCG) de la fin des travaux de la journée.

Après la fin des travaux, le chargé des travaux donnera ordre à ses deux équipes de déposer les dispositifs MALT précédemment posés sur les conducteurs. Après réception des confirmations de dépose par les chefs d'équipes, le chargé de travaux procédera à la restitution de l'ouvrage au poste de commandes groupées (PCG) par messages collationnés et notés de part et d'autre sur les documents d'accès. En possession de cette confirmation, le chargé de consignation pourra procéder à la déconsignation de l'ouvrage et ensuite l'ouvrage pourra être remis sous tension. En espérant que dans cette boucle d'informations avec de nombreux intervenants et de parfois de longues périodes de travaux, tous les dispositifs MALT ont été déposés de l'ouvrage. Sinon il y aura un déclenchement des disjoncteurs et l'ouvrage ne pourra pas être remis en exploitation. Ceci peut engendrer des pertes financières très importantes.

Maintenant ces opérations avec une exécution selon la présente invention :

Avant le début des travaux, éventuellement lors de l'établissement commun du Plan de Prévention, le chargé de travaux (CT) reçoit une signature électronique de la part du client pour ce chantier.

Cette signature électronique est destinée à certifier les échanges électroniques entre parties. Le poste de commandes groupées (PCG) concerné par les travaux dispose de son côté également d'une signature électronique permettant de certifier ses échanges avec le chargé de travaux (CT).

Aussi-bien le poste de commandes groupées (PCG) que le chargé de travaux (CT) dispose d'une centrale GCEN. Comme chaque échange entre parties est certifié par la signature électronique, les 2 centrales GCEN peuvent communiquer de manière sécurisée.

Le chargé de consignation (CC) du poste de commandes groupées (PCG), après avoir effectué la première étape de consignation, envoie son attestation de consignation de 1^{ère} étape par sa centrale GCEN à la GCEN du chargé de travaux (CT) concerné. La signature électronique certifie le message. Le chargé de travaux (CT) à son tour valide la réception.

Maintenant le chargé de travaux (CT) dispose de l'autorisation nécessaire pour procéder à la seconde étape de la consignation. A cet effet il donne ordre à ses 2 chefs d'équipe de procéder à la seconde étape de consignation aux endroits définis préalablement. Ces ordres sont également entrés dans la centrale GCEN. Celle-ci procède au contrôle de l'autorisation du poste de commandes groupées (PCG) à cet effet et le cas échéant d'un retour positif, valide l'ordre du chargé de travaux (CT) et procède automatiquement au déblocage des BOUZER ( Ceci n'est pas une condition nécessaire pour le fonctionnement en général, ni pour la pose des dispositif MALT, cependant c'est une possibilité pour gérer efficacement les ordres et autorisations du chargé de travaux (CT) avec ses équipes.) pour la pose des GMAPE (dispositif MALT sécurisé à système d'asservissement pince-étau APE) tel que prévu.

Les équipes respectives, après avoir identifié l'ouvrage à l'endroit défini et après avoir procédé à la VAT (vérification d'absence de tension) à l'aide d'un détecteur de tension, vont alors procéder à la mise à la terre des conducteurs à l'aide des GMAPE (suivant la procédure décrite auparavant). Lors de la condamnation de l'étau de terre du GMAPE, le BOUZER enregistre, par exemple à l'aide d'un système GPS, les coordonnées géographiques de l'endroit de fixation de l'étau de terre et ensemble avec l'identification du moment (date et heure) de la condamnation, il crée un code d'identification qu'il va garder dans sa propre mémoire et écrire dans la mémoire de la pince de mise à la terre et de l'étau de terre du GMAPE. Une fois fixé sur le conducteur et après un petit délai (0 à 10 Minutes par exemple), le BOUZER validera la pose du GMAPE par envoi (SMS par exemple) des informations à sa centrale GCEN. Maintenant le GMAPE en question ne pourra plus être déposé, par aucun BOUZER.

Maintenant ces informations sont visibles sur la centrale GCEN du chargé de travaux (CT) et également par le poste de commandes groupées (PCG). (Toute nouvelle information, après validation, peut être mise à jour automatiquement entre les centrales apparentées)

A la fin des travaux, le chargé de travaux (CT) commande la dépose des dispositifs MALT. A cet effet il donne des ordres précis à ces chefs d'équipe. Il entre également les ordres de dépose des dispositifs MALT dans la centrale GCEN, laquelle procède alors au déblocage des BOUZER pour la dépose des GMAPE concernés, et uniquement ceux-ci ! Avant de rendre au poste de commandes groupées (PCG) l'ouvrage en fin de travaux respectivement en interruption pour exploitation éventuelle, la centrale GCEN du chargé de travaux (CT) contrôle la validation de la dépose de tous les GMAPE de la liaison concernée. C'est uniquement après un retour positif que la centrale GCEN pourra exécuter l'ordre du chargé de travaux (CT) de rendre l'ouvrage pour remise sous tension à l'exploitant. La certification est assurée par la signature électronique.

De la même manière, la centrale GCEN du chargé de travaux (CT) permet d'annoncer à la centrale GCEN du poste de commandes groupées (PCG), le début et la fin des travaux de la journée, ainsi que les endroits d'intervention programmés pour la journée. Par la même interface il est possible de rajouter l'état d'évolution du chantier, permettant ainsi une vue actuelle de la situation terrain à toutes les parties concernées.

Cet exemple démontre clairement les avantages du trio GCEN, BOUZER et GMAPE :
- Gestion centralisée et intégrée de toutes les autorisations, ordres et exécutions.
- Evite la gestion d'une multitude de documents imprimés divers avec le risque d'oubli ou de faute involontaire.
- Garde la trace de toutes les informations et garantit l'accès à toutes ces informations en permanence.
- Evite la perte ou l'oubli d'une information importante.
- Assure le respect de la hiérarchie de toutes les opérations.
- Garantit la sécurité des chantiers, des personnes et des ouvrages.
- Evite les accidents et incidents.
- Evite les dégâts matériels et financiers lors d'une mise sous tension d'un ouvrage comportant encore un dispositif MALT oubliée!

En cas de besoin, la phase de vérification d'absence de tension (VAT) peut également être intégrée dans le système, obligeant ainsi les intervenants de procéder effectivement à la VAT avant la pose des dispositifs MALT. Pour ce faire le détecteur d'absence de tension sera équipé d'un système électronique d'identification et de communication similaire ou identique à celui intégré dans l'étau de terre ou la pince de mise à la terre du GMAPE. Le BOUZER procédera au contrôle de la validation de l'autotest effectué en début et à la fin de l'opération de vérification d'absence de tension (VAT). Le BOUZER pourra enregistrer l'endroit, la date et l'heure de la vérification d'absence de tension (VAT), ainsi que l'état vérifié de l'ouvrage électrique, phase par phase et également l'identification du détecteur utilisé. Ces informations sont transférées aussitôt à la centrale GCEN du chargé de travaux (CT). En cas de retour positif (ouvrage hors tension) les BOUZER concernés par la mise à la terre seront débloqués aussitôt. S'il s'agit du même BOUZER qui vérifie l'absence de tension et procède à la pose des dispositifs MALT, celui-ci n'a pas besoin d'une autorisation spécifique de la centrale GCEN.

Les détecteurs de vérification d'absence de tension (VAT) ont pour la majorité un problème en commun, c'est la visibilité et l'audibilité des informations recueillis sur l'ouvrage (distances élevées par rapport à l'opérateur, bruit de fond, soleil en face, etc...). L'utilisation du BOUZER dans la procédure de VAT permet de résoudre ces problèmes et de donner plus de sécurité à la VAT en général :

En intégrant une liaison de style « bluetooth » dans le détecteur d'absence de tension (VAT) et dans le BOUZER, ces deux appareils, après apparentage sécurisé, pourront communiquer entre eux ! Le détecteur d'absence de tension (VAT), en contact avec une ligne électrique a par exemple 10 mètres de distance de l'opérateur, échangera les informations détectées sur la ligne électrique avec le BOUZER. Celui-ci, à proximité de l'opérateur, pourra transmettre de manière sure et certaine et sans ambiguïtés à l'opérateur les informations reçues du détecteur. Ces informations détaillées pourront être transférées à la centrale GCEN.

En outre, ce tandem BOUZER et détecteur d'absence de tension (VAT), permettra d'affiner, en cas de besoin, les informations disponibles sur l'ouvrage électrique, par exemple le niveau de charge induit restant, ou bien le contrôle de la décharge d'une ligne DC, etc...

Non seulement le BOUZER pourra vérifier si l'autotest a été effectué mais il pourra carrément le faire lui-même.

Naturellement il est également possible de concevoir un tandem détecteur d'absence de tension (VAT) et station de communication, de contrôle et de répétition, style BOUZER, sans pour autant être un BOUZER dans le sens du présent document, relié à une centrale GCEN, mais tout simplement un outil similaire.

Il faut dire que ceci n'existe pas encore sur le marché et qu'il s'agit effectivement d'une nouveauté inventive avec innovation technique qui va certainement trouver son application industrielle. Le déposant se réserve le droit de revendiquer un tel dispositif dans le cadre d'une demande de brevet dérivée de la présente demande de brevet.

Le BOUZER est un dispositif distinct du dispositif MALT. Il ouvre la possibilité d'avoir un système d'asservissement pince-étau de terre sans clé. Le BOUZER est constitué dans son état basique d'une coque ou carcasse, d'une pile (éventuellement rechargeable) pour l'alimentation électrique, d'un circuit électronique avec mémoire et des raccords électriques permettant le branchement à l'étau de terre, à la pince de mise à la terre ou à tout autre équipement avec lequel il doit échanger des informations ou lequel il doit commander ou contrôler.

Pour identifier l'endroit de la pose de dispositif MALT, le BOUZER pout être équipé d'un capteur GPS. Pour compléter l'identification, le BOUZER peut être équipé d'une montre électronique qui complète tout enregistrement par son complément de date et d'heure précise. Ceci rend chaque enregistrement unique et identifiable, aussi-bien sur l'endroit que dans le temps.

En complément, le BOUZER peut être équipé d'un émetteur-récepteur de SMS par carte téléphonique. Ceci pour lui permettre de communiquer en temps réel les informations avec la centrale GCEN.

Le BOUZER peut être équipé d'une commande manuelle, permettant de sélectionner des données pré enregistrées comme par exemple le nom de la ligne électrique ou le numéro d'identification de l'endroit de pose (cellule xy, pylône numéro xy, etc...). Cette commande manuelle peut être complétée par une possibilité d'entrer des données sur place comme sur des téléphones portables par exemple.

En complément, le BOUZER peut être équipé d'une unité d'émission et de réception style « bluetooth » ou éventuellement WIFI pour des applications ou procédures spéciales. Ceci en vue de communiquer avec des outils à proximité comme par exemple un détecteur de d'absence de tension (détecteur VAT) ou éventuellement des BOUZER environnants, les centrales GCEN, un téléphone portable ou tout autre outil pouvant intervenir dans la procédure sécurisée de mise en oeuvre d'ordres subordonnés avec autorisations hiérarchisées par exemple, etc...

Dans cette panoplie de possibilités, il y également moyen de concevoir une structure de BOUZER hiérarchiques. Le BOUZER basique (esclave) est équipé des éléments strictement nécessaires, tandis que le BOUZER sophistiqué (maître) est équipé de tous les accessoires. Ceci pour suivre également la hiérarchie sur le terrain et l'utilisation qu'en feront les différents opérateurs.

La centrale GCEN est l'unité qui permet de regrouper et traiter toutes les informations reçues par les différents BOUZER, les autres centrales GCEN ou directement par ses opérateurs autorisés. Ici sont gérées les autorisations de travail, les attestations de consignation de première étape et les instructions de pose et dépose des dispositifs MALT, etc...

Le système permet de relier entre elles, autant de centrales GCEN que nécessaires. Ce groupe de centrales GCEN pourra alors échanger de manière sécurisée et intégrée. Chaque intervenant du groupe peut alors avoir accès à une multitude d'informations nécessaires au bon fonctionnement de son chantier.

Dans ce cas, des ordres et autorisations hiérarchiques, incluant plusieurs intervenants, deviennent facilement gérables tout en garantissant une mise en oeuvre en toute sécurité. Mais il ouvre également la possibilité à une personnalisation sur mesure de son utilisation.

Par sa faculté d'hiérarchisation des opérations (asservissement) en fonction des autorisations des différents intervenants, il permet de substituer par exemple, toute la gestion des dispositifs MALT à partir de la deuxième étape de consignation.

Le système de gestion centralisée par les centrales GCEN pourrait, sur les chantiers, également être relié aux services de secours. En installant une centrale CGEN auprès des services de secours, il serait possible d'y intégrer tous les chantiers de la région et les PRS (point de rassemblement secours) assimilés, en plus des autres informations utiles sur les intervenants. Lors d'un incident, d'un incendie ou d'un accident, il serait plus facile pour les intervenants du chantier de contacter les secours. Ceux-ci seraient directement en possession de toutes les informations utiles pour envoyer et guider rapidement les secours sur l'emplacement de l'accident.

La centrale GCEN peut être équipée d'un rack permettant le branchement simultané de plusieurs BOUZER pour le chargement des piles rechargeables et pour la mise à jour des données.

Le remplacement des dispositifs MALT classiques par des dispositifs MALT sécurisés selon l'invention décrite, pourrait épargner des dizaines de vies dans les années à venir. Outre l'application décrite ci-haut, la technologie décrite, qui est un système de serrures subordonnées à activation conditionnelle peut être utilisée dans d'autres domaines d'application. A chaque fois ou il faut respecter une chronologie dans l'exécution de tâches humaines ou mécaniques, ou chacune doit répondre elle-même à une ou plusieurs exigences avant de pouvoir changer d'état, la technologie décrite dans le présent document peut être utilisée.

### Description des dessins :

Fig. 1 : un étau de terre, vue de côté dégagée vers l'intérieur, position neutre, sans contrainte.
Fig. 2 : l'étau de terre de la Fig. 1, coupe, vue d'en haut sur mécanisme de blocage-déblocage en position neutre avec contacts électriques.
Fig. 3 : l'étau de terre de la Fig. 1, vue de côté dégagée vers l'intérieur, position de serrage au couple.
Fig. 4 : l'étau de terre de la Fig. 1, coupe, vue d'en haut sur mécanisme de blocage-déblocage en position de blocage après serrage au couple avec contacts électriques.
Fig. 5 : l'étau de terre de la Fig. 1, vue face arrière dégagée vers l'intérieur, position de serrage au couple.
Fig. 6 : l'étau de terre de la Fig. 1, coupe, vue d'en haut sur mécanisme de blocage-déblocage en position de blocage après serrage au couple avec contacts électriques et collecteur circulaire.
Fig. 7 : une pince de mise à la terre, vue de côté dégagée vers l'intérieur, position libre.
Fig. 8 : un mécanisme de libération bloqueur, avec déblocage arrêt suivant, de la pince de mise à la terre.
Fig. 9 : la pince de mise à la terre de la Fig. 7, coupe, vue d'en haut sur mécanisme de blocage-déblocage en position libre avec contacts électriques.
Fig. 10 : pince de mise à la terre de la Fig. 7, vue de côté dégagée vers l'intérieur, position fermée et bloquée.
Fig. 11 : pince de mise à la terre de la Fig. 7, coupe, vue d'en haut sur mécanisme de blocage-déblocage en position fermée et bloquée.
Fig. 12 : un schéma très simplifié, montrant différents dispositifs d'un système de mise à la terre selon l'invention.

### Description d'exécutions préférées sur base des dessins :

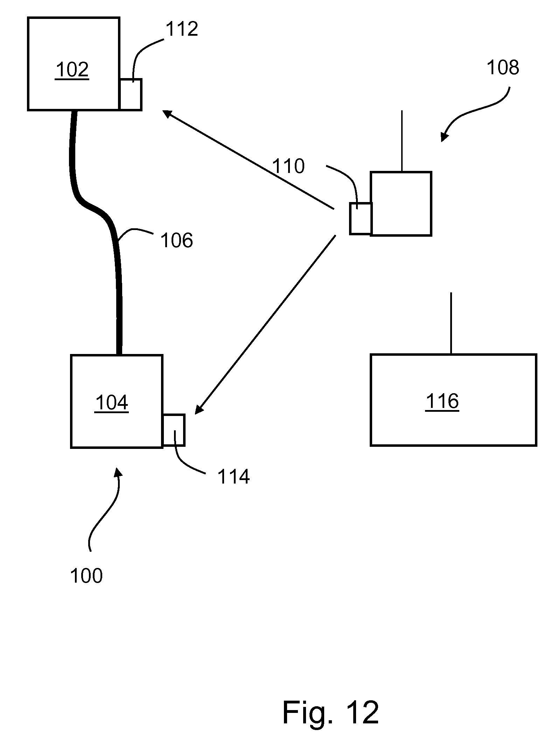

La Fig. 12 montre de façon schématique une exécution possible d'un système de mise à la terre selon l'invention. La référence 100 désigne un dispositif de mise à la terre comprenant un étau de terre 102, une pince de mise à la terre 104 et un conducteur électrique isolé 106, qui relie l'étau de terre 102 électriquement à la pince de mise à la terre 104. La référence 108 désigne un dispositif de contrôle et de commande électronique externe (encore appelé BOUZER). Il s'agit d'un dispositif mobile associé avec le dispositif de mise à la terre 100 pour le contrôle et la commande de ce dernier. Ce dispositif de contrôle et de commande électronique 108 dispose d'une interface 110, qui permet de communiquer à travers une interface 112 de l'étau de terre 102, avec des circuits électroniques de ce dernier, et à travers une interface 114 de la pince de mise à la terre 104, avec des circuits électroniques de cette dernière. La référence 116 désigne un dispositif de gestion centralisé optionnel (encore appelé centrale GCEN), qui peut communiquer avec plusieurs dispositifs de contrôle et de commande électronique 108.

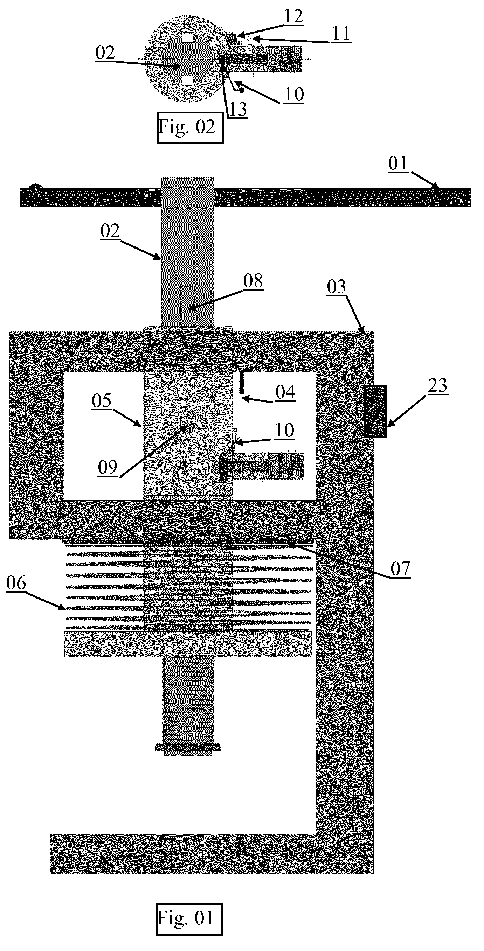

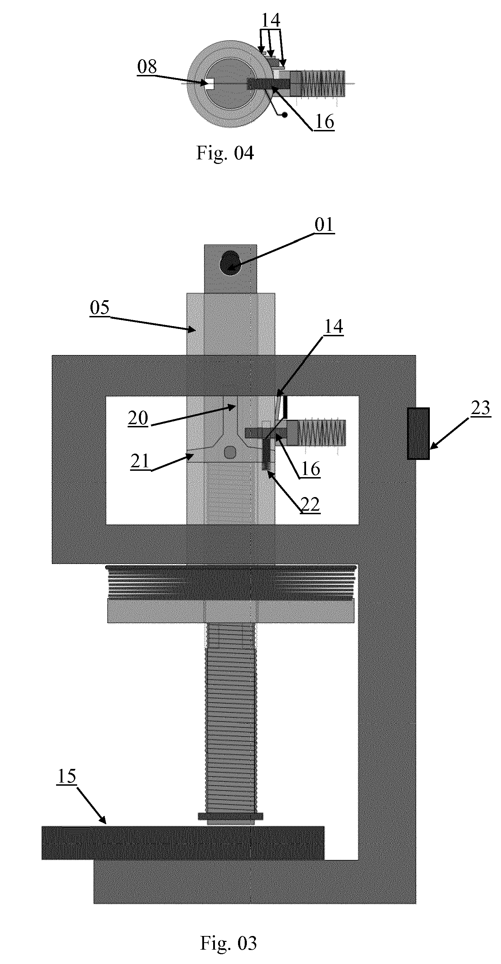

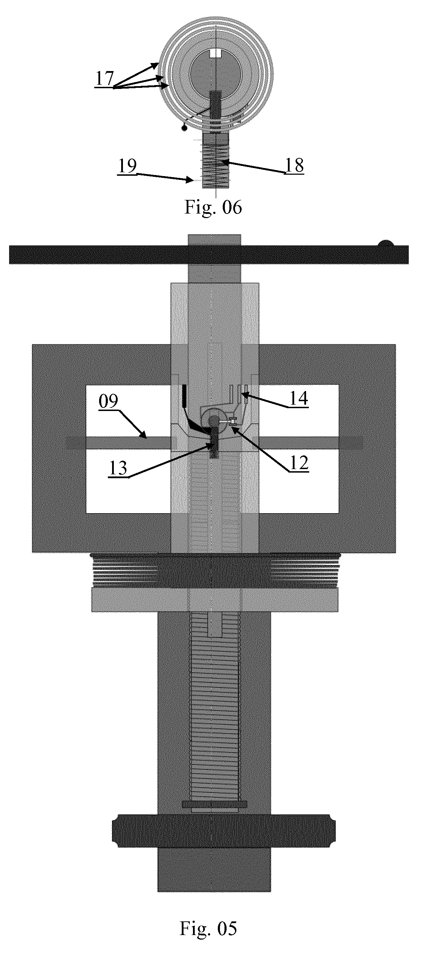

Les Fig. 1 à 6 montrent une exécution préférée de l'étau de terre 102 d'un dispositif de mise à la terre 100 selon l'invention. Une manette-étau 01, qui peut être fixe ou mobile, est utilisée par l'opérateur pour faire tourner une vis-étau 02 lors des opérations de pose ou dépose de l'étau de terre. L'étau de terre comprend une carcasse-étau 03 dans laquelle sont logés ou insérés les différents composants. La vis-étau 02 présente une ou plusieurs rainures-vis-étau 08. L'une d'entre elles étant destinée à accueillir une tige-bloqueur-étau 16.

Un cylindre-écrou 05 est en principe composé de deux pièces assemblées, à savoir un écrou rond qui en forme la partie inférieure et qui dispose d'un trou taraudé en son centre, dans lequel la vis-étau 02 est insérée. La partie supérieure du cylindre-écrou 05 présente une forme de cylindre (taraudé ou non), dans lequel la vis-étau 02 peut se déplacer. Bien sûr cette pièce de cylindre-écrou 05 peut également être fabriquée d'une seule pièce. Sur la face extérieure du cylindre-écrou 05 sont agencées, de préférence, au minimum deux rainures-cylindre 20 dans le sens vertical et une rainure-cylindre 21 dans le sens circulaire, laquelle est présente de préférence, tout autour du cylindre-écrou 05. Un arrêt-cylindre 09 est fixé sur la carcasse-étau 03. Il existe en autant d'exemplaires qu'il y a de rainures-cylindre verticales 20. L'arrêt-cylindre 20, qui est inséré dans la rainure-cylindre verticale 20, limite la mobilité du cylindre-étau 05 dans cet espace vertical. A partir du moment où la vis-étau 02 commence à effectuer de l'effort de compression sur une pièce de la charpente métallique 15, le cylindre-écrou 05 est déplacé vers le haut. A partir du moment où l'arrêt-cylindre 09 arrive dans la rainure-cylindre-circulaire 21, le cylindre-écrou 05 récupère la liberté de se déplacer de manière circulaire, c'est-à-dire dans la direction circulaire qu'emprunte la vis-étau 02. Lors du mouvement ascendant du cylindre-écrou 05, le ressort-étau 06 est comprimé contre la rondelle-étau 07, laquelle est serrée contre la carcasse-étau 03 par l'écrou rond qui est la partie inférieure du cylindre-écrou 05. Cette compression est le résultat du serrage au couple que le constructeur a déterminé auparavant et qui permet de maintenir en place l'étau de terre lors d'un amorçage en court-circuit de l'ouvrage électrique à travers du dispositif MALT. Une rondelle-étau 07 est destinée à faciliter la rotation ultérieure du cylindre-étau 05 avec le ressort-étau 06 sur la carcasse-étau 03.

Un actionneur-arrêt-étau 04 est formé par une tige, fixée sur la carcasse-étau 03.

Un dispositif « bloqueur » est un élément qui est composé de sa propre carcasse et principalement d'une tige-bloqueur-étau 16, d'un actionneur-bloqueur-étau 19 et d'un ressort-bloqueur-étau 18. Ledit bloqueur est fixé sur le cylindre-écrou 05.

Un dispositif « arrêt » est un élément qui est de préférence inséré dans le cylindre-écrou 05. Il est composé principalement d'une tige-arrêt-étau 13, d'une languette-arrêt-étau 10 et d'un ressort-arrêt-étau 22.

Lors du mouvement ascendant du cylindre-écrou 05, la languette-arrêt-étau 10 est poussée contre l'actionneur-arrêt-étau 04, de sorte à ce que le ressort-arrêt-étau 22 est comprimé et la tige-arrêt-étau 13 est enfoncée dans son trou ou carcasse de logement. La disparition de la tige-arrêt-étau 13 devant la tige-bloqueur-étau 16, libère le chemin pour que la tige-bloqueur-étau 16, actionnée par le ressort-bloqueur-étau 18 puisse se déplacer pour venir se heurter contre la vis-étau 02 et ensuite se loger dans la rainure-vis-étau 08.

A partir de cet instant, les deux éléments, à savoir la vis-étau 02 et le cylindre-écrou 05 deviennent solidaires et toute action circulaire sur la manette-étau 01 aura comme effet un déplacement solidarisé de la vis-étau 02 avec le cylindre-écrou 05, de sorte à ce que la compression sur la pièce de la charpente métallique 15 ne peut être augmentée. Ceci signifie que le déclenchement au couple de serrage de l'étau est atteint et que le desserrage de l'étau de terre et sa dépose de la pièce de la charpente métallique 15 est rendu mécaniquement impossible.

Lors du déplacement de la tige-bloqueur-étau 16 dans la rainure-vis-étau 08, l'interrupteur-contrôle-étau 11 qui est une tige de contact électrique fixé sur la tige-bloqueur-étau 16 vient se loger entre deux contacts-contrôle-étau, de sorte à garantir la continuité du circuit de contrôle électronique.

Les contacts électriques entre les pièces électroniques situées sur le cylindre-écrou 05 qui est un élément mobile rotatif, et les pièces électroniques situées sur la carcasse-étau 03 ou bien directement avec un raccord-électronique-étau 23, sont assurés à travers des contacts-à-frottement 14 fixés sur le cylindre-écrou 05 et un collecteur-circulaire 17 situé sur la carcasse-étau 03. Dès lors que le cylindre-écrou 05 arrive en fin de course ascendante, un peu avant la libération de la tige-bloqueur-étau 16, les contacts-à-frottement 14 qui sont de préférence des conducteurs électriques à ressort, entrent en contact avec le collecteur-circulaire 17 qui est composé d'autant d'anneaux qu'il y a de contacts-à-frottement 14. Lesdits anneaux sont des bons conducteurs électriques et sont isolés électriquement les uns par rapport aux autres. La continuité des contacts par chacun de ces anneaux vers d'autres composants électroniques fixés sur la carcasse-étau 03 ou bien directement vers le raccord-électronique-étau 23, est effectuée de préférence par des fils conducteurs électriques isolés. Le raccord-électronique-étau 23 est situé sur l'extérieur de la carcasse-étau 03 ou il permet le branchement électrique du BOUZER sur l'étau de terre.

L'étau de terre est également équipé, à l'intérieur de la carcasse-étau 03 au moins d'une mémoire électronique, laquelle contient au moins son code d'identification et qui permet d'identifier son association au code de la pince de mise à la terre avec lequel il est relié par le conducteur électrique isolé pour former ensemble un dispositif MALT. Ladite mémoire électronique qui n'est pas représentée sur les figures, est connectée électriquement au raccord-électronique-étau 23.

On peut naturellement envisager une version simplifiée de l'étau de terre, lequel n'est pas équipé du mécanisme du libre tournage de la manette après avoir atteint le couple de serrage. Dans ce cas le cylindre-écrou 05 n'est pas muni de la rainure-cylindre-circulaire 21. L'étau de terre n'a pas non plus besoin des contacts à frottement 14 ni des collecteurs circulaires 17. Dans ce cas le cylindre-écrou 05 ne doit plus tourner, ce qui simplifie énormément la construction. L'indication du bon couple de serrage est alors signalée par le blocage de la manette 1. Le blocage se faisant automatiquement, l'opérateur n'a pas besoin de respecter un marquage quelconque. Le reste de la mécanique ne change pas et l'utilisation du BOUZER n'est pas affectée par cette simplification constructive.

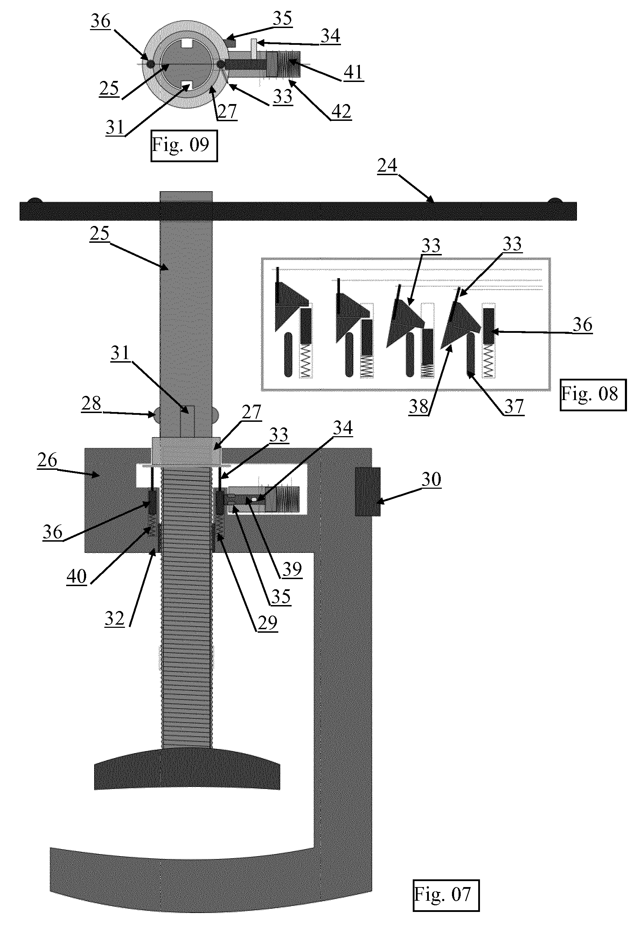

L'équipement actionneur ainsi que l'équipement bloqueur peuvent dans ce cas également être logés dans la carcasse-étau 03. Pour fonctionner correctement, la languette-arrêt-étau 10 doit être équipée, de manière similaire à celle de la pince de mise à la terre, avec un déviateur-arrêt-mobile et l'étau de terre doit être équipé d'un déviateur-arrêt-fixe. (Fig. 8)

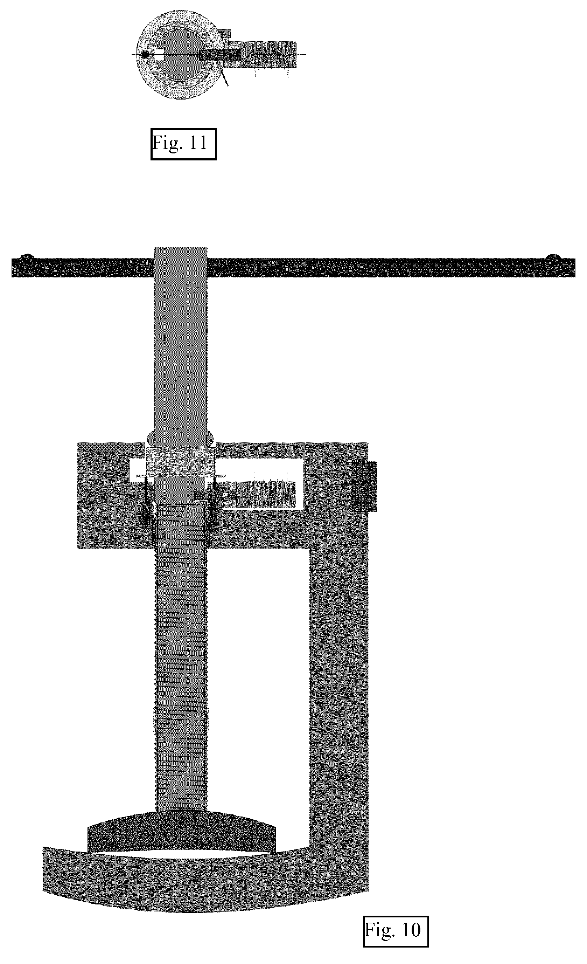

Les Fig. 7 à 11 montrent une exécution préférée d'une pince de mise à la terre 104 d'un dispositif de mise à la terre 100 selon l'invention.

Une manette-pince 24 qui peut être fixe ou mobile, est utilisée par l'opérateur pour faire tourner une vis-pince 25 lors des opérations de pose ou dépose de la pince de mise à la terre. La pince de mise à la terre comprend une carcasse-pince 26 dans laquelle sont logés ou insérés les différents composants. La vis-pince 25 présente une ou plusieurs rainures-vis-pince 31. L'une d'entre elles étant destinée à accueillir une tige-bloqueur-pince 39. Une bague-arrêt-pince 27 est destinée à libérer la tige-bloqueur-pince 39. A cet effet, lors de la fermeture de la pince de mise à la terre, en tournant la manette-pince 24, la vis-pince 25, à travers le filetage-carcasse-pince 32 est déplacée dans le sens de la fermeture. Dès que des limiteurs-vis-pince 28 rentrent en contact avec la bague-arrêt-pince 27, cette dernière est enfoncée dans la carcasse-pince 26 et enfonce à son tour les tiges-arrêt-pince 36 logés dans les trou-arrêt-pince 40. Les tiges-arrêt-pince 36 à leur tour vont comprimer les ressorts-arrêt-pince 29 respectifs. Dès que la tige-arrêt-pince 36 située en face de la tige-bloqueur-pince 39 a complètement libéré l'espace devant la tige-bloqueur-pince 39, celle-ci, actionnée par son ressort-bloqueur-pince 41 se déplace pour pousser contre la vis-pince 25 et peu après la tige-bloqueur-pince 39 va se déplacer dans la rainure-vis-pince 31. Dès cet instant la pince de mise à la terre est bloquée dans sa position complètement fermée. Les dispositifs d'arrêt-pince sont répartis autour de la vis-pince 25 et sont de préférence au nombre de 4 pièces. Sauf les dispositifs d'arrêt-pince situé en face de la tige-bloqueur-pince 39, les autres pouvant également être remplacés par un ressort circulaire fermé à 300 degrés.

Le mécanisme de libération bloqueur avec déblocage arrêt selon la Fig. 08, est un mécanisme qui enfonce la tige-arrêt-pince 36 pour libérer la tige-bloqueur-pince 39 pour ensuite se débloquer directement après. Ladite la tige-arrêt-pince 36 vient alors pousser contre la tige-bloqueur-pince 39, de sorte à pouvoir bloquer la tige-bloqueur-pince 39 dès sa rétraction par la mise sous tension de l'actionneur-bloqueur-pince 42. Le mécanisme de libération bloqueur avec déblocage arrêt selon la Fig. 08 fonctionne comme suit : Une languette-arrêt-pince 33 est équipée en bas d'un déviateur-arrêt-mobile 38. Lors de la descente de la bague-arrêt-pince 27 laquelle pousse la languette-arrêt-pince 33 sur la tige-arrêt-pince 36, le déviateur-arrêt-mobile 38 entre en contact avec le déviateur-arrêt-fixe 37. Celui-ci étant fixé sur la carcasse-pince 26 reste immobile. Le déviateur-arrêt-mobile 38 est fixé sur la languette-arrêt-pince 33, laquelle étant fabriquée d'un matériau flexible (type ressort par exemple) et laquelle étant fixée sur la bague-arrêt-pince 27. Le déviateur-arrêt-mobile 38 lors de sa compression sur le déviateur-arrêt-fixe 37, va se déplacer vers le côté pour libérer, en fin de course, la tige-arrêt-pince 36.

Lors du déplacement de la tige-bloqueur-pince 39 dans la rainure-vis-pince 31, un interrupteur-contrôle-pince 34, qui est une tige de contact électrique fixé sur la tige-bloqueur-pince 39 vient se loger entre les deux contacts-contrôle-pince 35, de sorte à garantir la continuité du circuit de contrôle électronique.

La continuité des contacts-contrôle-pince 35, ainsi que celle de l'actionneur-bloqueur-pince 42 est effectuée de préférence par des fils conducteurs électriques isolés vers le raccord-électronique-pince 30, situé sur l'extérieur de la carcasse-pince 26 ou il permet le branchement électrique du BOUZER sur la pince de mise à la terre.

Pour rendre possible la dépose de la pince de mise à la terre il faut pouvoir retirer la tige-bloqueur-pince 39 de la rainure-vis-pince 31. Ceci est rendu possible, grâce à l'introduction du BOUZER. Le BOUZER est connecté au raccord-électronique-pince 30. D'abord le BOUZER vérifie l'association du code d'identification de la pince de mise à la terre avec celui de l'étau de terre précédemment bloquée dans sa position serrée au couple sur la pièce de la charpente métallique 15. Si l'association est confirmée, le BOUZER alimente électriquement l'actionneur-bloqueur-pince 42. Ceci a comme effet la rétraction de la tige-bloqueur-pince 39 de la rainure-vis-pince 31 derrière la tige-arrêt-pince 36, de sorte à ce que celle-ci, actionnée par son ressort-arrêt-pince 29 est déplacée devant la tige-bloqueur-pince 39. En coupant l'alimentation électrique de l'actionneur-bloqueur-pince 42, la tige-bloqueur-pince 39 est à nouveau prisonnière de la tige-arrêt-pince 36. La vis-pince 25 étant à nouveau libre, la pince de mise à la terre peut être ouverte pour ensuite être posée et fixée sur le conducteur hors tension.

Lors de la dépose de la pince de mise à la terre, et après sa fermeture complète, avec comme conséquence le blocage de la vis-pince 25 par la tige-bloqueur-pince 39, le BOUZER est connecté à celle-ci pour vérifier son état de blocage par le contrôle de la continuité du circuit de contrôle électronique. Le cas échéant d'un retour positif, le BOUZER lit dans la mémoire de la pince de mise à la terre son code d'identification et l'enregistre dans sa propre mémoire pour ensuite pouvoir procéder à la dépose de l'étau de terre associé.

Pour rendre possible la dépose de l'étau de terre il faut pouvoir retirer la tige-bloqueur-étau 16 de la rainure-vis-étau 08. Ceci est rendu possible, grâce à l'introduction du BOUZER. Le BOUZER est connecté au raccord-électronique-étau 23.

D'abord le BOUZER vérifie l'association du code d'identification de l'étau de terre avec celui de la pince de mise à la terre précédemment déposée et bloquée dans sa position fermée. Si l'association est confirmée, le BOUZER alimente électriquement l'actionneur-bloqueur-étau 19. Ceci a comme effet la rétraction de la tige-bloqueur-étau 16 de la rainure-vis-étau 08 derrière la tige-arrêt-étau 13, de sorte à ce que celle-ci, actionnée par son ressort-arrêt-étau 22 est déplacée devant la tige-bloqueur-étau 16. En coupant l'alimentation électrique de l'actionneur-bloqueur-étau 19, la tige-bloqueur-étau 16 est à nouveau prisonnière de la tige-arrêt-étau 13. Le cylindre-étau 05 est à nouveau dissocié de la vis-étau 02, ce qui permet d'effectuer le desserrage de la vis-étau 02 de la pièce de la charpente métallique 15 et ainsi déposer l'étau de terre.

**Signes de référence :**

| ETAU | PINCE |
|---|---|
| 01 Manette-étau | 24 Manette-pince |
| 02 Vis-étau | 25 Vis-pince |
| 03 Carcasse-étau | 26 Carcasse-pince |
| 04 Actionneur-arrêt-étau | 27 Bague-arrêt-pince |
| 05 Cylindre-écrou | 28 Limiteur-vis-pince |
| 06 Ressort-étau | 29 Ressort-arrêt-pince |
| 07 Rondelle-étau | 30 Raccord-électronique-pince |
| 08 Rainure-vis-étau | 31 Rainure-vis-pince |
| 09 Arrêt-cylindre | 32 Filetage-carcasse-pince |
| 10 Languette-arrêt-étau | 33 Languette-arrêt-pince |
| 11 Interrupteur-contrôle-étau | 34 Interrupteur-contrôle-pince |
| 12 Contacts-contrôle-étau | 35 Contacts-contrôle-pince |
| 13 Tige-arrêt-étau | 36 Tige-arrêt-pince |
| 14 contacts à frottement | 37 Déviateur-arrêt-fixe |
| 15 Pièce de la charpente métallique | 38 Déviateur-arrêt-mobile |
| 16 Tige-bloqueur-étau | 39 Tige-bloqueur-pince |
| 17 Collecteur circulaire | 40 Trou-arrêt-pince |
| 18 Ressort-bloqueur-étau | 41 Ressort-bloqueur-pince |
| 19 Actionneur- bloqueur-étau | 42 Actionneur-bloqueur-pince |
| 20 Rainure-cylindre-verticale | |
| 21 Rainure-cylindre-circulaire | |
| 22 Ressort-arrêt-étau | |
| 23 Raccord-électronique-étau | |

## Revendications

1. Dispositif de mise à la terre (100), avec asservissement pince-étau, comprenant :
un étau de terre (102), équipé d'un système de verrouillage mécanique, lequel est muni d'un interrupteur mécanique ;
une pince de mise à la terre (104), équipée d'un mécanisme de verrouillage mécanique lequel est muni d'un interrupteur mécanique ;
ledit étau de terre (102) étant connecté par un conducteur électrique isolé (106) à ladite pince de mise à la terre (104);
ladite pince de mise à la terre (104) étant dans son état initial fermée et condamnée par son mécanisme de verrouillage, qui ferme en même temps l'interrupteur mécanique associé; et
ledit étau de terre (102) étant dans son état initial ouvert et déverrouillé et ledit interrupteur mécanique associé étant également ouvert ;
**caractérisé en ce que :**
ledit étau de terre (102) est en outre équipé :
d'un circuit de contrôle électronique dans lequel est intégré ledit interrupteur mécanique dudit étau de terre ;
d'un dispositif de déverrouillage à commande et action électronique, disposant de préférence d'un circuit électronique séparé ;
d'une mémoire électronique contenant au moins son identifiant unique et disposant de préférence d'un circuit électronique séparé ;
d'un connecteur électronique, rassemblant les différents circuits électroniques pour leur branchement externe ; et
ladite pince de mise à la terre (104) est en outre équipée :
d'un un circuit de contrôle électronique dans lequel est intégré ledit interrupteur mécanique de ladite pince de mise à la terre ;
d'un dispositif de déverrouillage à commande et action électronique ledit dispositif de déverrouillage disposant de préférence d'un circuit électronique séparé ;
d'une mémoire électronique contenant au moins son identifiant unique et disposant de préférence d'un circuit électronique séparé, ledit identifiant de la pince de mise à la terre (104) étant associé à l'identifiant de l'étau de terre (102) auquel ladite pince de mise à la terre (104) est reliée par son câble conducteur électrique isolé (106) ; et
d'un connecteur électronique (112, 114), rassemblant les différents circuits électroniques pour leur branchement externe.

2. Dispositif selon la revendication 1, dans lequel ledit étau de terre (102) est en outre équipé d'un dispositif de déclenchement automatique lors du serrage au couple préréglé.

3. Dispositif selon la revendication 2, dans lequel :
ledit dispositif de déclenchement automatique lors du serrage au couple préréglé, intégré dans l'étau de terre, et est actionné par une vis-étau (02) laquelle en compression sur une pièce de charpente métallique (15), par l'effort appliqué en tournant sur une manette-étau (01), comprime un ressort-étau (06) et déplaçant ainsi un cylindre-écrou (05) dans le sens opposé du serrage ;
un arrêt-cylindre (09) fixé sur une carcasse-étau (03) de façon à guider le cylindre-écrou (05) dans une partie verticale d'une rainure-cylindre (20), à partir du moment où la vis-étau (02) a atteint le couple de serrage, déterminé par ledit ressort-étau (06), l'arrêt-cylindre (09) a atteint une partie circulaire de la rainure-cylindre (21), de sorte que le mouvement autorisé du cylindre-écrou (05) par l'arrêt-cylindre (09) devient circulaire ;
un actionneur-arrêt-étau (04) est agencé de façon à pousser, pendant la phase ascendante du cylindre-écrou (05), une languette-arrêt-étau (10) contre un ressort-arrêt-étau (22), de sorte à libérer une tige-bloqueur-étau (16), laquelle actionnée par un ressort-bloqueur-étau (18) pousse contre la vis-étau (02) ;
en poursuivant le serrage, ladite tige-bloqueur-étau (16), lors de la présentation d'une rainure-vis-étau (08) en face d'elle, s'enfonce dans ladite rainure-vis-étau (08) de sorte à bloquer la vis-étau (02) sur le cylindre-écrou (05), de sorte qu'en continuant l'action sur la manette-étau (01), la vis-étau (02) tourne solidarisée avec le cylindre-écrou (05), de sorte qu'il n'y a plus d'effort complémentaire sur la pièce de la charpente métallique (15).

4. Dispositif selon la revendication 3, dans lequel la tige-bloqueur-étau (16), lors de son enfoncement dans la rainure-vis-étau (08), déplace l'interrupteur-contrôle-étau (11) fixé sur ladite tige-bloqueur-étau (16) entre deux contacts-contrôle-étau (12) de sorte à garantir la continuité du circuit électronique permettant la vérification de la position de ladite tige-bloqueur-étau (16) dans la rainure-vis-étau (08).

5. Dispositif selon l'une quelconque des revendications 1 à 4, dans lequel le mécanisme de verrouillage mécanique intégré dans la pince de mise à la terre est actionné, en fin de course d'une vis-pince (25), lors de la fermeture de ladite pince de mise à la terre, par des limiteurs-vis-pince (28) agissant sur une bague-arrêt-pince (28), laquelle à son tour enfonce des tiges-arrêt-pince (36) logés dans des trous-arrêt-pince (40), lesdites tiges-arrêt-pince (36) à leur tour comprimant des ressorts-arrêt-pince (29) respectifs, dès que la tige-arrêt-pince (36) située en face d'une tige-bloqueur-pince (39) a complètement libérée l'espace devant la tige-bloqueur-pince (39), celle-ci, actionnée par son ressort-bloqueur-pince (41) se déplaçant pour pousser contre la vis-pince (25) et peu après la tige-bloqueur-pince (39) se déplaçant dans la rainure-vis-pince (31), pour finalement bloquer la pince de mise à la terre dans sa position complètement fermée.

6. Dispositif selon la revendication 5, dans lequel une languette-arrêt-pince (33) agissant sur la tige-bloqueur-pince (39) est équipée en bas d'un déviateur-arrêt-mobile (38), lors de la descente de la bague-arrêt-pince (27) laquelle pousse la languette-arrêt-pince (33) sur la tige-arrêt-pince (36), le déviateur-arrêt-mobile (38) entrant en contact avec le déviateur-arrêt-fixe (37), celui-ci étant fixé sur une carcasse-pince (26) immobile, le déviateur-arrêt-mobile (38) étant fixé sur la languette-arrêt-pince (33), laquelle étant fabriquée d'un matériau flexible, par exemple du type d'un ressort, et laquelle est fixée sur la bague-arrêt-pince (27) ; le déviateur-arrêt-mobile (38) lors de sa compression sur le déviateur-arrêt-fixe (37), se déplaçant vers le côté pour libérer la tige-arrêt-pince (36) en fin de course de la vis-pince (25), lors de la fermeture de ladite pince de mise à la terre.

7. Méthode pour déposer l'étau de terre d'un dispositif selon la revendication 3 ou 4 d'une pièce de la charpente métallique (15) sur laquelle il est fixé, la pince de mise à la terre dudit dispositif ayant été préalablement déposée et bloquée :
on branche un dispositif de contrôle et de commande électronique externe sur ledit connecteur électronique de l'étau de terre (23), pour actionner ledit dispositif de déverrouillage à commande et action électronique intégré dans l'étau de terre ;
après contrôle de la correspondance du code de l'étau de terre au code de la pince de mise à la terre préalablement déposée et bloquée par le dispositif de contrôle et de commande électronique, celui-ci procède à la mise sous tension de l'actionneur-bloqueur-étau (19), déclenchant ainsi la rétraction de la tige-bloqueur-étau (16), de sorte à comprimer le ressort-bloqueur-étau (18) et à libérer la vis-étau (02), et à libérer la tige-arrêt-étau (13) et à ouvrir l'interrupteur-contrôle-étau (11), par la rétraction de la tige-bloqueur-étau (16), la tige-arrêt-étau (13), actionnée par son ressort-arrêt-étau (22) viendra ainsi bloquer la tige-bloqueur-étau (16) dans sa position de déblocage du cylindre-écrou (05) avec la vis-étau (02), maintenant l'étau de terre étant débloqué de sorte à ce que par l'intermédiaire de l'action sur la manette-étau (01) ledit étau de terre peut être déposé de la pièce de la charpente métallique (15).

8. Méthode pour déverrouiller et ouvrir la pince de mise à la terre d'un dispositif selon la revendication 3 ou 4, l'étau de terre dudit dispositif ayant été préalablement serré au couple et bloqué dans sa position serrée :
on branche un dispositif de contrôle et de commande électronique externe sur ledit connecteur électronique de la pince de mise à la terre (30) pour actionner le dispositif de déverrouillage à commande et action électronique intégré dans la pince de mise à la terre ;
après contrôle de la correspondance du code de la pince de mise à la terre au code de l'étau de terre préalablement serré au couple et bloqué dans sa position serrée et contrôlé par ledit dispositif de contrôle et de commande électronique, celui-ci procédant à la mise sous tension de l'actionneur-bloqueur-pince (42), déclenchant ainsi la rétraction de la tige-bloqueur-pince (39), de sorte à comprimer le ressort-bloqueur-pince (41) et à libérer la vis-pince (25), et à libérer la tige-arrêt-pince (36) et à ouvrir l'interrupteur-contrôle-pince (34), par la rétraction de la tige-bloqueur-pince (39), la tige-arrêt-pince (36), actionnée par son ressort-arrêt-pince (29) viendra ainsi bloquer la tige-bloqueur-pince (39) dans sa position de déblocage de la vis-pince (25), la ladite pince de mise à la terre étant maintenant débloquée de sorte à ce que par l'intermédiaire de l'action sur la manette-pince (24) ladite pince de mise à la terre peut être ouverte pour permettre son opération prévue.

9. Dispositif selon les revendications 1 à 6 auquel est associé un dispositif de contrôle et de commande électronique externe, comprenant dans le circuit de commande électronique de l'actionneur-bloqueur-étau (19) dans l'étau de terre, respectivement dans le circuit de commande électronique de l'actionneur-bloqueur-pince (42) dans la pince de mise à la terre, un interrupteur électronique apte à être actionné par ledit dispositif de contrôle et de commande électronique externe, lorsque ce dernier est branché sur ledit connecteur électronique de l'étau de terre (23), respectivement sur ledit connecteur électronique de la pince de mise à la terre (30), pour condamner en position d'ouverture ledit circuit électronique de l'actionneur-bloqueur-étau (19) en position bloquée lors du serrage au couple ou pour condamner en position d'ouverture ledit circuit électronique de l'actionneur-bloqueur-pince (42) en position bloquée lors du blocage de la pince de mise à la terre en position complètement fermée.

10. Un dispositif de contrôle et de commande électronique 10 associé avec un dispositif de mise à la terre selon l'une des revendications 1 à 6 ou 9, ledit dispositif de contrôle et de commande électronique étant un dispositif portable, équipé au minimum d'une source électrique, de préférence une pile rechargeable, d'une unité de contrôle et commande électronique munie de préférence d'un microprocesseur, d'une mémoire électronique et d'un connecteur électronique, permettant de connecter ledit dispositif de contrôle et de commande électronique à la pince de mise à la terre ou bien à l'étau de terre qu'il doit contrôler et commander ou sur lequel il doit prendre des informations ou avec lequel il doit échanger des informations.

11. Dispositif selon la revendication 10, lequel est équipé, en plus : d'un émetteur-récepteur de données sans fil, fonctionnant avec une liaison téléphonique mobile ou un système similaire, ou bien fonctionnant avec un système de type « bluetooth » ou bien fonctionnant avec un système de type « wifi », ou bien fonctionnant avec une combinaison de plusieurs de ces systèmes de communication sans fil, et/ou d'un système permettant l'identification du positionnement géographique de type « GPS » ; et/ou
d'une unité de commande mécanique comme par exemple une roulette ou bien d'une unité de commande électronique comme par exemple un écran tactile ou bien un clavier, ou bien une combinaison de plusieurs de ces unités de commande ; et/ou
d'un dispositif de type horodateur ou similaire, permettant l'enregistrement exact de chaque action avec son facteur temps associé. (date, heure, durée, etc...) ; et/ou
d'un lecteur de codes-barres ou codes flash et/ou d'un appareil photo et/ou d'un micro et /ou
d'un capteur gustatif, et/ou d'un capteur sensitif, ou de tout autre équipement permettant l'identification sensorielle de l'endroit et de ses environs, y compris les êtres vivants.

12. Système de dispositifs de mise à la terre et en court-circuit de manière sécurisé, ledit système comprenant un ou plusieurs étaux de terre, tels que définis dans l'une des revendications 1 à 6 ou 9, et plusieurs pinces de mise à la terre, telles que définies dans l'une des revendications 1 à 6 ou 9, ledit système comprenant, pour sa mise en oeuvre de manière sécurisée, en outre un dispositif de contrôle et de commande électronique selon les revendications 9 ou 10, dont la mémoire électronique intègre un mode opératoire prédéfini en oeuvre apte à mettre en oeuvre ledit système par l'utilisation desdits codes d'identification uniques contenus dans les mémoires des pinces de mise à la terre et étaux de terre reconnus en tant que tels par ledit dispositif de contrôle et de commande électronique, permettant à celui-ci de procéder au blocage ou au déblocage des pinces de mise à la terre et/ou étaux de terre suivant ledit mode opératoire prédéfini.

13. Dispositif de gestion centralisé associé avec plusieurs dispositifs de mise à la terre selon l'une des revendications 1 à 6 ou 9 et avec plusieurs dispositifs de contrôle et de commande électronique externes, de préférence selon l'une des revendications 10 ou 11, ledit dispositif de gestion centralisé comprenant un ordinateur fixe ou portable, avec de préférence un écran, ledit ordinateur étant programmé pour le pilotage dynamique desdits dispositifs de contrôle et de commande électronique, ledit dispositif de gestion centralisé pilotant et gérant les informations, ordres et autorisations reçus des différents intervenants, d'autres dispositifs de gestion centralisé associées et des dispositifs de contrôle et de commande électronique associés, pour transmettre, après contrôle et le moment venu des ordres et autorisations aux différents dispositifs de contrôle et de commande électronique concernés chacun des dispositifs de contrôle et de commande électronique associés étant un dispositif pouvant agir de manière indépendante, une fois connecté ou associé à un dispositif de gestion centralisé, le dispositif de contrôle et de commande électronique gardant son indépendance, tout en échangeant des informations avec ledit dispositif de gestion centralisé, ledit dispositif de gestion centralisé disposant d'une option dynamique, de sorte qu'en choisissant cette option, dynamique le dispositif de gestion centralisé peut intervenir dans le mode opératoire pour compléter des informations, ordres et autorisations, en les envoyant au(x) dispositif(s) de contrôle et de commande électronique concerné(s).

14. Dispositif de mise à la terre selon l'une des revendications 1 à 6 ou 9, auquel est associé un dispositif de contrôle et de commande électronique, de préférence selon l'une des revendications 10 ou 11, ledit dispositif de contrôle et de commande électronique étant programmé pour contrôler, lors des opérations de pose et de dépose du dispositif de mise à la terre, l'état des mécanismes intégrés aux composantes dudit dispositif de mise à la terre, identifiant aussi-bien l'état respectif du composant et, sur base dudit identifiant unique contenu dans la mémoire électronique dudit composant, son identité, avant de procéder aux commandes programmées.

15. Dispositif de mise à la terre selon la revendication 14 , ledit dispositif de contrôle et de commande électronique étant en outre associé à un dispositif de gestion centralisé selon la revendication 12 ou 13, de façon à pouvoir recevoir ses ordres et autorisations également dudit dispositif de gestion centralisé.

16. Dispositif selon la revendication 15, comprenant :
un détecteur de vérification d'absence de tension, lequel est intégré d'un système de communication de type bluetooth, pour l'échange d'informations avec ledit dispositif de contrôle et de commande électronique ;
ledit dispositif de contrôle et de commande électronique informant directement l'opérateur de l'état de l'ouvrage électrique sur lequel il est posé, cette information se faisant à l'aide de signaux lumineux et/ ou à l'aide de signaux sonores et/ou à l'aide d'autres moyens de communication.

## Patentansprüche

1. Erdungsvorrichtung (100) mit Rückführung Zange-Zwinge, umfassend:
eine Erdungszwinge (102), die mit einem mechanischen Verriegelungssystem ausgestattet ist, das mit einem mechanischen Schalter versehen ist;
eine Erdungszange (104), die mit einem mechanischen Verriegelungsmechanismus ausgestattet ist, der mit einem mechanischen Schalter versehen ist;
wobei die Erdungszwinge (102) durch einen isolierten elektrischen Leiter (106) an die Erdungszange (104) angeschlossen ist;
wobei die Erdungszange (104) in ihrem Anfangszustand geschlossen und durch ihren Verriegelungsmechanismus verriegelt ist, der gleichzeitig den zugeordneten mechanischen Schalter schließt; und wobei die Erdungszwinge (102) in ihrem Ausgangszustand offen und entriegelt ist und wobei der zugeordnete mechanische Schalter auch offen ist;
**dadurch gekennzeichnet, dass**:
die Erdungszwinge (102) ferner mit Folgendem ausgestattet ist:
mit einem elektronischen Kontrollschaltkreis, in dem der mechanische Schalter der Erdungszwinge integriert ist;
mit einer Entriegelungsvorrichtung mit elektronischer Steuerung und Betätigung, die vorzugsweise über eine getrennte elektronische Schaltung verfügt;
mit einem elektronischen Speicher, der mindestens seine eindeutige Kennung enthält und vorzugsweise über eine getrennte elektronische Schaltung verfügt;
mit einem elektronischen Anschluss, der die verschiedenen elektronischen Schaltungen für ihren externen Anschluss sammelt; und
die Erdungszange (104) ferner mit Folgendem ausgestattet ist:
mit einem elektronischen Kontrollschaltkreis, in dem der mechanische Schalter der Erdungszange integriert ist;
mit einer Entriegelungsvorrichtung mit elektronischer Steuerung und Betätigung, wobei die Entriegelungsvorrichtung vorzugsweise über eine getrennte elektronische Schaltung verfügt;
mit einem elektronischen Speicher, der mindestens seine eindeutige Kennung enthält und vorzugsweise über eine getrennte elektronische Schaltung verfügt, wobei die Kennung der Erdungszange (104) der Kennung der Erdungszwinge (102) zugeordnet ist, mit der die Erdungszange (104) durch ihr isoliertes elektrisches Leiterkabel (106) verbunden ist; und
mit einem elektronischen Anschluss (112, 114), der die verschiedenen elektronischen Schaltungen für ihren externen Anschluss sammelt.

2. Vorrichtung nach Anspruch 1, wobei die Erdungszwinge (102) ferner mit einer automatischen Auslösevorrichtung beim Anziehen mit voreingestellten Drehmoment ausgestattet ist.

3. Vorrichtung nach Anspruch 2, wobei:
die automatische Auslösevorrichtung beim Anziehen mit voreingestellten Drehmoment, die in der Erdungszwinge integriert ist, durch eine Schraubstockschraube (02) betätigt wird, die in Kompression auf ein Stück einer Metallkonstruktion (15) durch die Kraft, die durch Drehen auf einen Schraubstockhebel (01) aufgebracht wird, eine Schraubstockfeder (06) komprimiert und dadurch einen Schraubstockzylinder (05) in die Richtung, die zum Anziehen entgegengesetzt ist, verschiebt;
eine Zylinder-Arretierung (09), die an einem Schraubstockrahmen (03) derart befestigt ist, um den Schraubstockzylinder (05) in einem vertikalen Abschnitt einer Zylindernut (20) ab dem Zeitpunkt zu führen, zu dem die Schraubstockschraube (02) das Anzugsmoment erreicht hat, das durch die Schraubstockfeder (06) bestimmt ist, die Zylinder-Arretierung (09) einen kreisförmigen Abschnitt der Zylindernut (21) derart erreicht hat, dass die Bewegung von dem Schraubstockzylinder (05), die durch die Zylinder-Arretierung (09) ermöglicht ist, kreisförmig wird;
ein Schraubstock-Arretieraktuator (04) derart angeordnet ist, um während der aufsteigenden Phase des Schraubstockzylinders (05) eine Schraubstock-Arretierlasche (10) derart gegen eine Schraubstock-Arretierfeder (22) zu drücken, um eine Schraubstock-Blockierstange (16) freizugeben, die nach Betätigung durch eine Schraubstock-Blockierfeder (18) gegen die Schraubstockschraube (02) drückt;
unter Fortsetzen des Anziehens die Schraubstock-Blockierstange (16), wenn vor ihr eine Schraubstockschrauben-Nut (08) auftaucht, in die Schraubstockschrauben-Nut (08) derart eindringt, um die Schraubstockschraube (02) auf dem Schraubstockzylinder (05) derart zu blockieren, dass die Schraubstockschraube (02) bei weiterem Einwirken auf den Schraubstockhebel (01) mit dem Schraubstockzylinder (05) fest verbunden derart dreht, dass keine zusätzliche Kraft mehr auf das Stück der Metallkonstruktion (15) aufgebracht wird.

4. Vorrichtung nach Anspruch 3, wobei die Schraubstock-Blockierstange (16) bei ihrem Eindringen in die Schraubstockschrauben-Nut (08) den Schraubstock-Kontrollschalter (11), der auf der Schraubstock-Blockierstange (16) befestigt ist, zwischen zwei Schraubstock-Kontrollkontakten (12) derart verschiebt, um die Kontinuität der elektronischen Schaltung zu gewährleisten, die das Überprüfen der Position der Schraubstock-Blockierstange (16) in der Schraubstockschrauben-Nut (08) ermöglicht.

5. Vorrichtung nach einem der Ansprüche 1 bis 4, wobei der mechanische Verriegelungsmechanismus, der in der Erdungszange integriert ist, in der Endlage einer Zangen-Schraube (25) beim Schließen der Erdungszange durch Zangen-Schrauben-Begrenzer (28) betätigt wird, die auf einen Zangen-Arretierring (28) einwirken, der seinerseits Zangen-Arretierstangen (36), die in Zangen-Arretierlöchern (40) angeordnet sind, hineindrückt, wobei die Zangen-Arretierstangen (36) ihrerseits jeweilige Zangen-Arretierfedern (29) komprimieren, sobald die Zangen-Arretierstange (36), die gegenüber von einer Zangen-Blockierstange (39) angeordnet ist, den Raum vor der Zangen-Blockierstange (39) vollständig freigegeben hat, wobei diese, die durch ihre Zangen-Blockierfeder (41) betätigt wird, verschoben wird, um gegen die Zangen-Schraube (25) zu drücken, und wobei kurz danach die Zangen-Blockierstange (39) in die Zangen-Nut-Schraube (31) verschoben wird, um schließlich die Erdungszange in ihrer vollständig geschlossenen Position zu blockieren.

6. Vorrichtung nach Anspruch 5, wobei eine Zangen-Arretierlasche (33), die auf die Zangen-Blockierstange (39) einwirkt, unten mit einem beweglichen Arretier-Abweiser (38) ausgestattet ist, die beim Absenken des Zangen-Arretierrings (27) die Zangen-Arretierlasche (33) auf die Zangen-Arretierstange (36) schiebt, wobei der bewegliche Arretier-Abweiser (38) mit dem festen Arretier-Abweiser (37) in Kontakt kommt, wobei dieser auf einem unbeweglichen Zangenrahmen (26) befestigt ist, wobei der bewegliche Arretier-Abweiser (38) auf der Zangen-Arretierlasche (33) befestigt ist, die aus einem flexiblen Material, beispielsweise vom Typ einer Feder, hergestellt ist und die auf dem Zangen-Arretierring (27) befestigt ist; wobei der bewegliche Arretier-Abweiser (38) bei seiner Kompression auf dem festen Arretier-Abweiser (37) zur Seite verschoben wird, um die Zangen-Arretierstange (36) in der Endlage der Zangen-Schraube (25) beim Schließen der Erdungszange freizugeben.

7. Verfahren zum Abbau der Erdungszwinge einer Vorrichtung nach Anspruch 3 oder 4 von einem Stück der Metallkonstruktion (15), auf der sie befestigt ist, wobei die Erdungszange der Vorrichtung zuvor ausgebaut und blockiert worden ist:
es wird eine externe elektronische Kontroll- und Steuervorrichtung an den elektronischen Anschluss der Erdungszwinge (23) angeschlossen, um die Entriegelungsvorrichtung mit elektronischer Steuerung und Betätigung, die in der Erdungszwinge integriert ist, zu betätigen;
nach Überprüfen der Entsprechung des Codes der Erdungszwinge mit dem Code der Erdungszange, die zuvor ausgebaut und von der elektronischen Kontroll- und Steuervorrichtung blockiert worden ist, legt diese Spannung an den Schraubstock-Blockieraktuator (19) an, wodurch auf diese Weise das Zurückziehen der Schraubstock-Blockierstange (16) derart ausgelöst wird, um die Schraubstock-Blockierfeder (18) zu komprimieren und die Schraubstockschraube (02) freizugeben, und um die Schraubstock-Arretierstange (13) freizugeben und den Schraubstock-Kontrollschalter (11) durch das Zurückziehen der Schraubstock-Blockierstange (16) zu öffnen, die Schraubstock-Arretierstange (13), die durch ihre Schraubstock-Arretierfeder (22) betätigt wird, wird auf diese Weise die Schraubstock-Blockierstange (16) in ihrer Freigabeposition des Schraubstockzylinders (05) mit der Schraubstockschraube (02) blockieren, wobei die Erdungszwinge jetzt derard freigegeben wird, dass die Erdungszwinge von dem Stück der Metallkonstruktion (15) durch das Einwirken auf den Schraubstockhebel (01) ausgebaut werden kann.

8. Verfahren zum Entriegeln und Öffnen der Erdungszange einer Vorrichtung nach Anspruch 3 oder 4, wobei die Erdungszwinge der Vorrichtung zuvor mit dem Drehmoment angezogen und in ihrer angezogenen Position blockiert worden ist:
es wird eine externe elektronische Kontroll- und Steuervorrichtung an den elektronischen Anschluss der Erdungszange (30) angeschlossen, um die Entriegelungsvorrichtung mit elektronischer Steuerung und Betätigung, die in der Erdungszange integriert ist, zu betätigen;
nach Überprüfen der Entsprechung des Codes der Erdungszange mit dem Code der Erdungszwinge, die zuvor mit dem Drehmoment angezogen und in ihrer angezogenen Position blockiert und von der elektronischen Kontroll- und Steuervorrichtung kontrolliert worden ist, wobei diese Spannung an den Zangen-Blockieraktuator (42) anlegt, wodurch auf diese Weise das Zurückziehen der Zangen-Blockierstange (39) derart ausgelöst wird, um die Zangen-Blockierfeder (41) zu komprimieren und die Zangens-Schraube (25) freizugeben, und um die Zangen-Arretierstange (36) freizugeben und um den Zangen-Kontrollschalter (34) durch das Zurückziehen der Zangen-Blockierstange (39) zu öffnen, wird die Zangen-Arretierstange (36), die durch ihre Zangen-Arretierfeder (29) betätigt wird, auf diese Weise die Zangen-Blockierstange (39) in ihrer Freigabeposition der Zangen-Schraube (25) blockieren, wobei die Erdungszange jetzt derart freigegeben wird, dass die Erdungszange durch das Einwirken auf den Zangen-Hebel (24) geöffnet werden kann, um ihre vorgesehene Operation zu ermöglichen.

9. Vorrichtung nach den Ansprüchen 1 bis 6, mit der eine externe elektronische Kontroll- und Steuervorrichtung verbunden ist, umfassend in der elektronischen Steuerschaltung des Schraubstock-Blockieraktuators (19) in der Erdungszwinge beziehungsweise in der elektronischen Steuerschaltung des Zangen-Blockieraktuators (42) in der Erdungszange einen elektronischen Schalter, der geeignet ist, durch die externe elektronische Kontroll- und Steuervorrichtung betätigt zu werden, wenn diese Letztere an den elektronischen Anschluss der Erdungszwinge (23) beziehungsweise an den elektronischen Anschluss der Erdungszange (30) angeschlossen ist, um in Öffnungsposition die elektronische Schaltung des Schraubstock-Blockieraktuators (19) in blockierter Position beim Anziehen am Drehmoment zu verriegeln oder um in Öffnungsposition die elektronische Schaltung des Zangen-Blockieraktuators (42) in blockierter Position beim Blockieren der Erdungszange in vollständig geschlossener Position zu verriegeln.

10. Eine elektronische Kontroll- und Steuervorrichtung (10), die mit einer Erdungsvorrichtung nach einem der Ansprüche 1 bis 6 oder 9 verbunden ist, wobei die elektronische Kontroll- und Steuervorrichtung eine tragbare Vorrichtung ist, die mit mindestens einer Stromquelle, vorzugsweise einer wiederaufladbaren Batterie, mit einer elektronischen Kontroll- und Steuereinheit, die vorzugsweise mit einem Mikroprozessor versehen ist, mit einem elektronischen Speicher und mit einem elektronischen Anschluss ausgestattet ist, der es ermöglicht, die elektronische Kontroll- und Steuervorrichtung an die Erdungszange oder an die Erdungszwinge anzuschließen, die sie kontrollieren und steuern muss oder an der sie Informationen entnehmen muss oder mit der sie Informationen austauschen muss.

11. Vorrichtung nach Anspruch 10, die ferner ausgestattet ist mit: einem drahtlosen Datensendeempfänger, der mit einer Mobiltelefonverbindung oder einem ähnlichen System funktioniert oder auch mit einem System vom Typ des "Bluetooth-Systems" funktioniert oder auch mit einem System vom Typ des "WLAN-Systems" funktioniert oder auch mit einer Kombination von mehreren dieser drahtlosen Kommunikationssysteme funktioniert und/oder
einem System, das die Bestimmung der geographischen Position ermöglicht, vom Typ des "GPS-Systems", und/oder
einer mechanischen Steuereinheit, wie beispielsweise ein Rädchen, oder auch mit einer elektronischen Steuereinheit, wie beispielsweise ein Touchscreen, oder auch einer Tastatur oder auch einer Kombination von mehreren dieser Steuereinheiten; und/oder
einer Vorrichtung vom Typ des Zeitstempels oder dergleichen, die das genaue Aufzeichnen von jedem Vorgang mit seinem dazugehörigen Zeitfaktor ermöglicht (Datum, Uhrzeit, Dauer usw. ...) ; und/oder
einem Barcode- oder Flashcode-Leser und/oder einem Fotoapparat und/oder einem Mikrofon und/oder
einem Geschmackssensor und/oder einem Sensitivsensor oder mit jeder anderen Ausrüstung, die die sensorische Identifizierung des Ortes und seiner Umgebungen, einschließlich der Lebewesen, ermöglicht.

12. System mit Vorrichtungen zum sicheren Erden und Kurzschließen, wobei das System eine oder mehrere Erdungszwingen, wie in einem der Ansprüche 1 bis 6 oder 9 definiert, und mehrere Erdungszangen, wie in einem der Ansprüche 1 bis 6 oder 9 definiert, aufweist, wobei das System für sein sicheres Umsetzen ferner eine elektronische Kontroll- und Steuervorrichtung nach den Ansprüchen 9 oder 10 aufweist, deren elektronischer Speicher einen vorbestimmten Betriebsmodus aufweist, der geeignet ist, das System durch das Verwenden der eindeutigen Identifikationscodes umzusetzen, die in den Speichern der Erdungszangen und Erdungszwingen enthalten sind, die als solche von der elektronischen Kontroll- und Steuervorrichtung erkannt werden, wodurch dieser ermöglicht wird, das Blockieren und Freigeben der Erdungszangen und/oder Erdungszwingen nach dem vorbestimmten Betriebsmodus vorzunehmen.

13. Zentralisierte Verwaltungsvorrichtung, die mit mehreren Erdungsvorrichtungen nach einem der Ansprüche 1 bis 6 oder 9 und mit mehreren externen elektronischen Kontroll- und Steuervorrichtungen, vorzugsweise nach einem der Ansprüche 10 oder 11, verbunden ist, wobei die zentralisierte Verwaltungsvorrichtung einen festen oder tragbaren Computer, vorzugsweise mit einem Bildschirm, aufweist, wobei der Computer für das dynamische Steuern der elektronischen Kontroll- und Steuervorrichtungen programmiert ist, wobei die zentralisierte Verwaltungsvorrichtung die Informationen, Befehle und Bewilligungen steuert und verwaltet, die von den verschiedenen Eingreifenden, von anderen verbundenen zentralisierten Verwaltungsvorrichtungen und von den verbundenen elektronischen Kontroll- und Steuervorrichtungen empfangen werden, um nach Überprüfung und zu gegebener Zeit Befehle und Bewilligungen an die verschiedenen betreffenden elektronischen Kontroll- und Steuervorrichtungen zu übertragen, wobei jede der verbundenen elektronischen Kontroll- und Steuervorrichtungen eine Vorrichtung ist, die unabhängig agieren kann, sobald sie an eine zentralisierte Verwaltungsvorrichtung angeschlossen oder damit verbunden ist, wobei die elektronische Kontroll- und Steuervorrichtung ihre Unabhängigkeit bewahrt, während sie Informationen mit der zentralisierten Verwaltungsvorrichtung austauscht, wobei die zentralisierte Verwaltungsvorrichtung über eine dynamische Option derart verfügt, dass beim Wählen dieser dynamischen Option die zentralisierte Verwaltungsvorrichtung in den Betriebsmodus eingreifen kann, um Informationen, Befehle und Bewilligungen zu vervollständigen und sie an die betreffende(n) elektronische(n) Kontroll- und Steuervorrichtung(en) zu senden.

14. Erdungsvorrichtung nach einem der Ansprüche 1 bis 6 oder 9, mit der eine elektronische Kontroll- und Steuervorrichtung, vorzugsweise nach einem der Ansprüche 10 oder 11, verbunden ist, wobei die elektronische Kontroll- und Steuervorrichtung programmiert ist, um bei den Operationen des Einbaus und des Ausbaus der Erdungsvorrichtung den Zustand der Mechanismen, die in den Komponenten der Erdungsvorrichtung integriert sind, zu kontrollieren, und dabei auch den jeweiligen Zustand der Komponente und auf der Grundlage der eindeutigen Kennung, die in dem elektronischen Speicher der Komponente enthalten ist, seine Identität zu identifizieren, bevor die programmierten Befehle durchgeführt werden.

15. Erdungsvorrichtung nach Anspruch 14, wobei die elektronische Kontroll- und Steuervorrichtung ferner mit einer zentralisierten Verwaltungsvorrichtung nach Anspruch 12 oder 13 derart verbunden ist, um ihre Befehle und Bewilligungen auch von der zentralisierten Verwaltungsvorrichtung empfangen zu können.

16. Vorrichtung nach Anspruch 15, umfassend:
einen Detektor zum Prüfen auf Spannungsfreiheit, der von einem Kommunikationssystem vom Typ des Bluetooth-Kommunikationssystems zum Austauschen von Informationen mit der elektronischen Kontroll- und Steuervorrichtung integriert ist;
wobei die elektronische Kontroll- und Steuervorrichtung den Bediener direkt über den Zustand der elektrischen Anlage informiert, auf der sie angebracht ist, wobei diese Information mit Hilfe von Lichtsignalen und/oder mit Hilfe von akustischen Signalen und/oder mit Hilfe von anderen Kommunikationsmitteln erfolgt.

## Claims

1. Earthing device (100), with clamp-vice servocontrol, comprising:
an earth vice (102), equipped with a mechanical locking system, which is provided with a mechanical switch;
an earthing clamp (104), equipped with a mechanical locking mechanism which is provided with a mechanical switch;
said earth vice (102) being connected by an insulated electrical conductor (106) to said earthing clamp (104);
said earthing clamp (104) being in its initial state closed and locked by its locking mechanism, which simultaneously closes the associated mechanical switch; and said earth vice (102) being in its initial state open and unlocked and said associated mechanical switch also being open;
**characterized in that:**
said earth vice (102) is further equipped:
with an electronic control circuit in which said mechanical switch of said earth vice is incorporated;
with an electronically controlled and actuated unlocking device, preferably having a separate electronic circuit;
with an electronic memory containing at least its unique identifier and preferably having a separate electronic circuit;
with an electronic connector, gathering together the different electronic circuits for the
external connection thereof; and
said earthing clamp (104) is further equipped:
with an electronic control circuit in which said mechanical switch of said earthing clamp is incorporated;
with an electronically controlled and actuated unlocking device, said unlocking device preferably having a separate electronic circuit; with an electronic memory containing at least its unique identifier and preferably having a separate electronic circuit, said identifier of the earthing clamp (104) being associated with the identifier of the earth vice (102) to which said earthing clamp (104) is linked by its insulated electrical conductor cable (106); and with an electronic connector (112, 114), gathering together the different electronic circuits for the external connection thereof.

2. Device according to Claim 1, in which said earth vice (102) is further equipped with an automatic triggering device which triggers upon tightening to the preset torque.

3. Device according to Claim 2, in which:
said automatic triggering device which triggers upon tightening to the preset torque, incorporated in the earth vice, is actuated by a vice screw (02) which, by compression on a metal framework part (15), by the load applied by turning a vice handle (01), compresses a vice spring (06) thus displacing a nut cylinder (05) in the opposite direction to the tightening;
a cylinder stop (09) fixed onto a vice frame (03) so as to guide the nut cylinder (05) in a vertical part of a cylinder groove (20), from the moment when the vice screw (02) has reached the tightening torque, determined by said vice spring (06), the cylinder stop (09) has reached a circular part of the cylinder groove (21), such that the movement allowed of the nut cylinder (05) by the cylinder stop (09) becomes circular;
a vice stop actuator (04) is arranged so as to push, during the upward phase of the nut cylinder (05), a vice stop tongue (10) against a vice stop spring (22), so as to release a vice blocking rod (16), which, when actuated by a vice blocking spring (18) pushes against the vice screw (02);
by continuing the tightening, said vice blocking rod (16), upon the appearance of a vice screw groove (08) facing it, is driven into said vice screw groove (08) so as to block the vice screw (02) on the nut cylinder (05) so that, by continuing the action on the vice handle (01), the vice screw (02) turns together with the nut cylinder (05), such that there is no more additional load on the part of the metal framework (15).

4. Device according to Claim 3, in which the vice blocking rod (16), when driven into the vice screw groove (08), displaces the vice control switch (11) fixed onto said vice blocking rod (16) between two vice control contacts (12) so as to guarantee the continuity of the electronic circuit making it possible to verify the position of said vice blocking rod (16) in the vice screw groove (08).

5. Device according to any one of Claims 1 to 4, in which the mechanical locking mechanism incorporated in the earthing clamp is actuated, at the end of travel of a clamp screw (25), upon the closure of said earthing clamp, by clamp screw limiters (28) acting on a clamp stop ring (28), which in turn drives clamp stop rods (36) housed in clamp stop holes (40), said clamp stop rods (36) in turn compressing respective clamp stop springs (29), as soon as the clamp stop rod (36) situated facing a clamp blocking rod (39) has completely freed the space in front of the clamp blocking rod (39), the latter, actuated by its clamp blocking spring (41) being displaced to push against the clamp screw (25) and, a little later, the clamp blocking rod (39) being displaced into the clamp screw groove (31), to finally block the earthing clamp in its completely closed position.

6. Device according to Claim 5, in which a clamp stop tongue (33) acting on the clamp blocking rod (39) is equipped at the bottom with a mobile stop deflector (38), upon the descent of the clamp stop ring (27) which pushes the clamp stop tongue (33) on the clamp stop rod (36), the mobile stop deflector (38) entering into contact with the fixed stop deflector (37), the latter being fixed onto an immobile clamp frame (26), the mobile stop deflector (38) being fixed onto the clamp stop tongue (33), which is made of a flexible material, for example of the type of a spring, and which is fixed onto the clamp stop ring (27); the mobile stop deflector (38) upon its compression on the fixed stop deflector (37) being displaced to the side to release the clamp stop rod (36) at the end of travel of the clamp screw (25), upon the closure of said earthing clamp.

7. Method for removing the earth vice of a device according to Claim 3 or 4 from a part of the metal framework (15) onto which it is fixed, the earthing clamp of said device having been previously removed and blocked:
an external electronic checking and control device is connected to said electronic connector of the earth vice (23), to actuate said electronically controlled and actuated unlocking device incorporated in the earth vice;
after checking the correspondence of the code of the earth vice to the code of the earthing clamp previously removed and blocked by the electronic checking and control device, the latter proceeds to power up the vice blocking actuator (19), thus triggering the retraction of the vice blocking rod (16), so as to compress the vice blocking spring (18) and release the vice screw (02), and release the vice stop rod (13) and open the vice control switch (11), by the retraction of the vice blocking rod (16), the vice stop rod (13) actuated by its vice stop spring (22) will thus come to block the vice blocking rod (16) in its position of unblocking of the nut cylinder (05) with the vice screw (02), the earth vice now being unblocked so that, via the action on the vice handle (01), said earth vice can be removed from the part of the metal framework (15).

8. Method for unlocking and opening the earthing clamp of a device according to Claim 3 or 4, the earth vice of said device having been previously tightened to the torque and blocked in its tightened position:
an external electronic checking and control device is connected to said electronic connector of the earthing clamp (30) to actuate the electronically controlled and actuated unlocking device incorporated in the earthing clamp;
after having checked the correspondence of the code of the earthing clamp to the code of the earth vice previously tightened to the torque and blocked in its tightened position and checked by said electronic checking and control device, the latter proceeding to power up the clamp blocking actuator (42), thus triggering the retraction of the clamp blocking rod (39), so as to compress the clamp blocking spring (41) and release the clamp screw (25), and release the clamp stop rod (36) and open the clamp control switch (34), by the retraction of the clamp blocking rod (39), the clamp stop rod (36), actuated by its clamp stop spring (29) will thus come to block the clamp blocking rod (39) in its position of unblocking of the clamp screw (25), said earthing clamp being now unblocked so that, via the action on the clamp handle (24), said earthing clamp can be opened to allow the planned operation thereof.

9. Device according to Claims 1 to 6 with which is associated an external electronic checking and control device comprising, in the electronic control circuit of the vice blocking actuator (19) in the earth vice, respectively in the electronic control circuit of the clamp blocking actuator (42) in the earthing clamp, an electronic switch capable of being actuated by said external electronic checking and control device, when the latter is connected to said electronic connector of the earth vice (23), respectively to said electronic connector of the earthing clamp (30) to lock in the open position said electronic circuit of the vice blocking actuator (19) in the blocked position upon the tightening to the torque or to lock in the open position said electronic circuit of the clamp blocking actuator (42) in the blocked position upon the blocking of the earthing clamp in the completely closed position.

10. Electronic checking and control device associated with an earthing device according to one of Claims 1 to 6 or 9, said electronic checking and control device being a portable device, equipped at least with an electrical source, preferably a rechargeable battery, an electronic checking and control unit preferably provided with a microprocessor, an electronic memory and an electronic connector, making it possible to connect said electronic checking and control device to the earthing clamp or else to the earth vice that it has to check and control or on which it has to take information or with which it has to exchange information.

11. Device according to Claim 10, which is equipped, in addition: with a wireless data transceiver, operating with a mobile telephone link or a similar system, or else operating with a system of "Bluetooth" type or else operating with a system of "wifi" type, or else operating with a combination of several of these wireless communication systems, and/or
with a system for identifying geographic positioning of "GPS" type, and/or
with a mechanical control unit such as, for example, a wheel or else an electronic control unit such as, for example, a touchscreen or else a keyboard, or else a combination of several of these control units; and/or
with a device of time clock or similar type, allowing for the exact recording of each action with its associated time factor (date, time, duration, etc.); and/or
with a barcode or flash code reader and/or a camera and/or a microphone and/or a gustatory sensor, and/or a sensitive sensor, or any other equipment allowing for the sensory identification of the place and of its environs, including the living beings.

12. System of devices for earthing and short-circuiting safely, said system comprising one or more earth vices, as defined in one of Claims 1 to 6 or 9, and several earthing clamps, as defined in one of Claims 1 to 6 or 9; said system further comprising, for the safe implementation thereof, an electronic checking and control device according to Claims 9 or 10, the electronic memory of which incorporates a predefined procedure capable of implementing said system by the use of said unique identification codes contained in the memories of the earthing clamps and earth vices recognized as such by said electronic checking and control device, making it possible for the latter to proceed to block or unblock the earthing clamps and/or earth vices according to said predefined procedure.

13. Centralized management device associated with several earthing devices according to one of Claims 1 to 6 or 9 and with several external electronic checking and control devices, preferably according to one of Claims 10 or 11, said centralized management device comprising a fixed or portable computer, preferably with a screen, said computer being programmed to dynamically drive said electronic checking and control devices, said centralized management device driving and managing the information, commands and authorizations received from the various parties involved, from other associated centralized management devices and from the associated electronic checking and control devices, to transmit, after checking and in due course, commands and authorizations to the different electronic checking and control devices concerned, each of the associated electronic checking and control devices being a device that can act independently, once connected to or associated with a centralized management device, the electronic checking and control device keeping its independence, while exchanging information with said centralized management device, said centralized management device having a dynamic option, such that, by choosing this dynamic option, the centralized management device can intervene in the procedure for completing information, commands and authorizations, by sending them to the electronic checking and control device(s) concerned.

14. Earthing device according to one of Claims 1 to 6 or 9, with which is associated an electronic checking and control device, preferably according to one of Claims 10 or 11, said electronic checking and control device being programmed to check, during operations to fit and remove the earthing device, the state of the mechanisms incorporated in the components of said earthing device, identifying both the respective state of the component and, on the basis of said unique identifier contained in the electronic memory of said component, its identity, before proceeding with the programmed controls.

15. Earthing device according to Claim 14, said electronic checking and control device being also associated with a centralized management device according to Claim 12 or 13, so as to be able to receive its commands and authorizations also from said centralized management device.

16. Device according to Claim 15, comprising:
a detector for checking absence of voltage which is incorporated in a Bluetooth-type communication system, for the exchange of information with said electronic checking and control device;
said electronic checking and control device directly informing the operator of the state of the electrical work to which it is fitted, this information being provided using light signals and/or using sound signals and/or using other communication means.
